# FASCICULE DE BREVET EUROPEEN

(11) **EP 4 001 005 B1**
(45) Date de publication et mention de la délivrance du brevet: **20.09.2023**
(21) Numéro de dépôt: 21208330.7
(22) Date de dépôt: 15.11.2021
(51) Int. Cl.: B60N 2/70, B60N 2/58

(54) **COUSSIN POUR SIÈGE DE VÉHICULE**
POLSTER FÜR FAHRZEUGSITZ
CUSHION FOR VEHICLE SEAT

(30) Priorité: 23.11.2020 FR 2012021
(43) Date de publication de la demande: 25.05.2022
(73) Titulaire: FAURECIA Sièges d'Automobile, 92000 Nanterre (FR)
(72) Inventeur: GLINEZ, Pascal, 78120 RAMBOUILLET (FR); COTTIN, Dominique, 45170 CHILLEURS AUX BOIS (FR)
(74) Mandataire: Plasseraud IP

(56) Documents cités:
- EP-A1- 1 580 080
- WO-A1-2017/129433
- WO-A2-98/29849
- DE-U1-202019 104 372
- JP-A- 2013 112 315

## Description

La présente divulgation est relative à un coussin de siège pour véhicule automobile, en particulier un coussin d'assise ou encore un coussin de dossier, ainsi qu'un procédé de fabrication d'un tel coussin.

La présente divulgation concerne encore un siège équipé d'un tel(s) coussin(s) en particulier d'assise et/ou de dossier, ainsi qu'un procédé de modernisation d'un tel siège.

### Domaine technique

La présente divulgation relève du domaine des sièges de véhicule automobile qui comportent :
- une assise, y compris un châssis d'assise et un coussin d'assise fixé au châssis d'assise et,
- un châssis de dossier, ainsi qu'un coussin de dossier fixé au châssis de dossier.

Le coussin d'assise (ou de dossier) comporte une matelassure typiquement moulée à partir d'un produit moussé, qui est coiffée par un revêtement typiquement textile, ou en cuir, maintenu en tension sur la matelassure, et fixé par ses bords au siège, en particulier au châssis de dossier ou de siège.

### Technique antérieure

Les sièges modernes, en particulier des véhicules automobiles de finitions supérieures, peuvent être équipés de fonctions supplémentaires, telles qu'une fonction de chauffage, de massage, ou de ventilation.

Par exemple, il est connu :
- un équipement de massage avec actionneurs qui sont prévus au dos de la matelassure, entre un sommier du châssis de dossier et la face arrière de la matelassure, ou encore,
- un équipement de chauffage avec présence d'une nappe chauffante entre un sommier du châssis de dossier et la face arrière de la matelassure,
- un équipement de ventilation avec présence d'un ventilateur entre un sommier du châssis de dossier (ou de l'assise) et la face arrière de la matelassure.

Ces équipements sont intégrés en usine lors de la fabrication du siège, puis surmontés des coussins avec leur matelassure et revêtements. Le siège ainsi assemblé est ensuite fixé au plancher de véhicule.

Selon les constatations des inventeurs, et dans les véhicules automobiles équipés de tels sièges, et lorsque le siège n'est pas pourvu dès l'origine d'un tel équipement, la conception des sièges connus de l'état de la technique ne permet pas de démonter le siège au sein même du véhicule, c'est dire sans démonter le siège du plancher du véhicule, en vue de procéder à l'amélioration du siège par l'ajout d'une fonction supplémentaire de chauffage, de ventilation, ou de massage. En effet, l'ajout d'un tel équipement nécessiterait de sortir le siège du véhicule pour retirer les revêtements et la matelassure, ce retrait étant nécessaire à un tel ajout.

C'est la raison pour laquelle, en pratique, et lorsque le siège n'est pas équipé dès l'origine d'une fonction de chauffage, de massage ou de ventilation, le siège n'est pas amélioré par l'ajout d'une telle fonction.

On connait toutefois du document US3.495.871, un siège de véhicule dont la matelassure du coussin de dossier (ou le coussin d'assise) est constituée de trois parties, totalement séparées, y compris une matelassure centrale et deux matelassures latérales. Les deux matelassures latérales sont inamovibles, tandis que la matelassure centrale est amovible.

L'amovibilité de la matelassure centrale permet à l'utilisateur, lorsque 'un revêtement coiffant la matelassure centrale est détendu, d'ajouter des cales (ou « pads » de mousse) sous la matelassure entre la face arrière et des bandes élastiques de l'assise formant le sommier, et en vue d'adapter le confort du siège à l'occupant.

L'amovibilité de la matelassure permet encore à l'utilisateur de régler la position longitudinale de la matelassure centrale par rapport aux matelassures latérales inamovibles. Le revêtement coiffant la matelassure, (en particulier la matelassure centrale) est fixé à l'avant du siège à l'aide de bouton-pression.

Selon les constatations de l'inventeur, si un tel siège selon le document US 3.495.871 est évolutif en ce sens que le confort du siège peut être modifié simplement par l'utilisateur par ajout de pads en mousse, voire le réglage de la position longitudinale de la matelassure d'assise, une telle conception de siège présente pour défaut une faible tenue et résistance à l'usage du coussin, en particulier du revêtement sur la matelassure centrale, voire de la matelassure centrale dont le maintien de la position longitudinale est assurée uniquement par les frottements avec le sommier. Pour cette raison, une telle conception de siège évolutif est incompatible avec les exigences actuelles des constructeurs automobiles

On connait encore de document FR2.833.899 A1 un siège dont la matelassure en mousse comprend une gorge pour la fixation d'un revêtement coiffant une portion centrale de la matelassure.

On connait encore du document FR 2.911.821 A1 un siège avec matelassure de dossier ou d'assise, et un revêtement amovible qui comporte une première fermeture à glissière qui court le long des côtés de la matelassure afin de la lier à la matelassure. Le revêtement comporte une portion centrale de support qui est fixée par une seconde fermeture à glissière.

On connait encore du document JP2012126240 un siège de véhicule qui comporte un revêtement qui comporte une portion de base, et une portion de siège, fixée de manière amovible à la portion de base par deux fermetures à glissière. Le document DE202019104372 montre des éléments de rembourrage latéraux un module d'airbag et un corps en mousse qui peuvent être fixés à la coque de maintien ou à l'élément de rembourrage central à l'aide d'une fixation signifie.

### Résumé

La présente divulgation vient améliorer la situation

II est proposé un coussin pour siège de véhicule comprenant :
- une matelassure présentant une face avant destinée à recevoir une partie de l'occupant, et une face arrière destinée à venir en appui sur un châssis du siège, des faces latérales, opposées, et des faces d'extrémités, opposées
- un revêtement recouvrant au moins la face avant, voire tout ou partie des faces latérale et/ou des faces d'extrémité.

Selon la présente divulgation, la matelassure comprend une première fente et une deuxième fente, s'étendant chacune en longueur suivant au moins une section de longueur du coussin entre les deux faces d'extrémité de la matelassure, la première fente et la deuxième fente étant respectivement traversantes depuis la face avant jusqu'à la face arrière,
la première fente et la deuxième fente divisant la matelassure suivant une direction transversale en trois portions, y compris une portion centrale, une première portion latérale et une deuxième portion latérale, disposées de part et d'autre de la portion centrale, la première fente délimitée entre une paroi interne de la première portion latérale et une première paroi externe de la portion centrale, la deuxième fente délimitée entre une paroi interne de la deuxième portion latérale et une deuxième paroi externe de la portion centrale
et dans lequel une première portion de fil, rigide, solidaire de la première portion latérale s'étend au niveau de la première fente, le long de la paroi interne de la première portion latérale , et une deuxième portion de fil rigide, solidaire de la deuxième portion latérale s'étend au niveau de la deuxième fente , le long de la paroi interne de la deuxième portion latérale.

Selon la présente divulgation, ledit coussin comprend un système de clipsage avec un premier système de clipse au niveau de la première paroi externe, configuré pour venir se fixer de manière réversible sur la première portion de fil, et un deuxième système de clipse au niveau de la deuxième paroi externe configuré pour venir se fixer de manière amovible sur la deuxième portion de fil en assurant le maintien de la portion centrale de la matelassure bloquée entre la première portion latérale et la deuxième portion latérale.

Lorsque le premier système de clipse et le deuxième système de clipse sont détachés, respectivement de la première portion de fil et de la deuxième portion de fil, la portion centrale de matelassure est libérée, configurée pour être amovible par rapport à la première portion latérale et à la deuxième portion latérale en dégageant une ouverture d'accès entre ladite première portion latérale et ladite deuxième portion latérale alors destinées à rester fixées au châssis du siège

Les caractéristiques exposées dans les paragraphes suivants peuvent, optionnellement, être mises en oeuvre. Elles peuvent être mises en oeuvre indépendamment les unes des autres ou en combinaison les unes avec les autres :

Selon un mode de réalisation, la première fente et la deuxième fente s'étendent en longueur entre les deux faces d'extrémité partiellement sur la longueur de la matelassure et de sorte que la portion centrale, d'une part, la première portion latérale et la deuxième portion latérale, d'autre part, sont attenantes à une portion d'extrémité de la matelassure dépourvue des première et deuxième fentes et dans lequel la portion centrale de la matelassure est configurée pour être amovible par rapport à la première portion latérale et à la deuxième portion latérale alors destinées à rester fixées au châssis du siège, par pliage de la matelassure, une fois le premier système de clipse et le deuxième système de clipse détachés respectivement de la première portion de fil et de la deuxième portion de fil. En particulier, une gorge peut s'étendre transversalement sur la face avant de la matelassure, au moins sur la largeur de la portion centrale au niveau d'une zone de jonction entre la portion centrale et ladite portion d'extrémité, la portion centrale étant configurée être amovible par pliage autour de l'axe de la gorge.

Selon un mode de réalisation, la première fente et la deuxième fente s'étendent en longueur partiellement sur la longueur de la matelassure, en laissant ladite portion d'extrémité à laquelle sont attenantes, la portion centrale, d'une part, et la première portion latérale et la deuxième portion latérale, d'autre part, la portion d'extrémité portant l'une des deux faces d'extrémité, dite première face d'extrémité, et dans lequel la première fente et la deuxième fente s'étendent jusqu'à l'autre face des deux faces d'extrémités, dite deuxième face d'extrémité, la première fente et la deuxième fentes étant débouchantes au travers de la deuxième face d'extrémité.

Selon un mode de réalisation :
- la première portion de fil s'étendant le long de la première fente présente des portions de longueur, courbes, surmoulées dans la première portion latérale et des portions de longueur saillantes de la paroi interne de la première portion latérale servant d'accroche à la fixation du revêtement et/ou du premier système de clipse,
- la deuxième portion de fil s'étendant le long de la deuxième fente présente des portions de longueur, courbes, surmoulées dans la deuxième portion latérale et des portions de longueur saillantes de la paroi interne de la deuxième portion latérale servant d'accroche à la fixation du revêtement et/ou du deuxième système de clipse.

Selon un mode de réalisation, un même fil, rigide, de forme générale en U constitue la première portion de fil et la deuxième portion de fil, d'une part, constituées par les deux ailes verticales du U, solidarisées respectivement à la première portion latérale et la deuxième portion latérale, et d'autre part, une section de longueur intermédiaire formant l'aile horizontale du U qui est surmoulée par la portion d'extrémité de la matelassure.

Selon un mode de réalisation, le revêtement, est divisé, transversalement, au moins sur la longueur de la matelassure portant la première fente et la deuxième fente en :
- un premier revêtement latéral destiné à venir recouvrir au moins la face avant de la première portion latérale de la matelassure,
- un deuxième revêtement latéral destiné à venir recouvrir au moins la face avant de la deuxième portion latérale de la matelassure,
- un revêtement central destiné à venir recouvrir la portion centrale de la matelassure.

Par exemple :
- le premier revêtement latéral est accroché à la première portion de fil pour assurer son maintien en tension sur la première portion latérale,
- le deuxième revêtement latéral est accroché à la deuxième portion de fil pour assurer son maintien en tension sur la deuxième portion latérale;
- le revêtement central est accroché de manière réversible par le premier système de clipse sur la première portion de fil et par le deuxième système de clipse sur la deuxième portion de fil configurés pour assurer le maintien en tension du revêtement central sur la portion centrale avec ledit maintien de la portion centrale bloquée entre la première portion latérale et la deuxième portion latérale et dans lequel le revêtement central est configuré pour autoriser le dégagement de l'ouverture d'accès après détachement des premier et second système de clipse libérant le revêtement central et la portion centrale, puis le retrait du revêtement central et de la portion centrale.

Selon un mode de réalisation du coussin :
- un ou plusieurs profilé(s) d'accroche solidaire(s) du premier revêtement latéral comprend une première portion d'accrochage venant s'accrocher sur la première portion de fil,
- un ou plusieurs profilé(s) d'accroche solidaire(s) du deuxième revêtement latéral (30) comprend une première portion d'accrochage venant s'accrocher sur la deuxième portion de fil.

Selon un mode de réalisation du coussin :
- le premier système de clipse comprend une seconde portion d'accrochage du profilé d'accroche ainsi qu'un premier organe de clipsage solidaire du revêtement central configuré pour venir se fixer de manière réversible dans la seconde portion d'accrochage alors que la première portion d'accrochage du profilé d'accroche est en prise avec la première portion de fil,
- le deuxième système de clipse comprend une seconde portion d'accrochage du profilé d'accroche ainsi qu'un deuxième organe de clipsage solidaire du revêtement central configuré pour venir se fixer de manière réversible dans la seconde portion d'accrochage alors que la première portion d'accrochage du profilé d'accroche est en prise avec la deuxième portion de fil.

Selon un mode de réalisation du coussin, la surface avant de la matelassure au niveau de la première portion latérale et la surface avant de la matelassure au niveau la deuxième portion latérale s'étendent en saillie de manière relevée par rapport à la surface avant de la matelassure au niveau de la portion centrale, et de sorte que la première portion latérale et la deuxième portion latérale sont configurées pour assurer un maintien latéral de la partie du corps de l'occupant en appui sur la portion centrale.

Selon un mode de réalisation, la matelassure, y compris la première portion latérale, la deuxième portion latérale et la portion centrale est un corps moulé obtenu par moulage d'un produit moussé. Selon un exemple la première fente et la deuxième fente sont obtenues au moins en partie respectivement par une première coupe et une deuxième coupe dans le corps moulé.

Selon un autre aspect, il est proposé un siège de véhicule comprenant un châssis d'assise et un châssis de dossier, un coussin d'assise solidaire du châssis d'assise destiné à recevoir la partie basse du corps de l'occupant, et un coussin de dossier solidaire du châssis de dossier, destiné à recevoir la partie haute du corps de l'occupant, et dans lequel ledit coussin d'assise est un coussin selon la présente divulgation et/ou le coussin de dossier est un coussin selon la présente divulgation, ladite portion centrale du coussin, d'assise ou de dossier, comprenant le système de clipsage avec le premier système de clipse au niveau de la première paroi externe, configuré pour venir se fixer de manière réversible sur la première portion de fil, et le deuxième système de clipse au niveau de la deuxième paroi externe configuré pour venir se fixer de manière amovible sur la deuxième portion de fil en assurant le maintien de la portion centrale de la matelassure bloquée entre la première portion latérale et la deuxième portion latérale, et dans lequel lorsque le premier système de clipse et le deuxième système de clipse sont détachés respectivement de la première portion de fil et de la deuxième portion de fil, la portion centrale de matelassure est libérée configurée pour être amovible par rapport à la première portion latérale et à la deuxième portion latérale en dégageant une ouverture d'accès entre la première portion latérale et à la deuxième portion latérale alors fixées au châssis d'assise ou de dossier du siège.

Les caractéristiques exposées dans les paragraphes suivants peuvent, optionnellement, être mises en oeuvre. Elles peuvent être mises en oeuvre indépendamment les unes des autres ou en combinaison les unes avec les autres :

Selon un mode de réalisation du siège :
- la première portion latérale du coussin d'assise et/ou du coussin de dossier est fixée au châssis d'assise et/ou au châssis de dossier par le premier revêtement latéral, recouvrant ladite première portion latérale, et l'accroche de la première portion d'accrochage du profilé d'accroche sur la première portion de fil,
- la deuxième portion latérale du coussin d'assise et/ou du coussin de dossier est fixée au châssis d'assise et/ou au châssis de dossier par le deuxième revêtement latéral, recouvrant ladite deuxième portion latérale, et l'accroche de la première portion d'accrochage du profilé d'accroche sur la deuxième portion de fil.

Selon un mode de réalisation du siège, la portion centrale de la matelassure du coussin d'assise et/ou du coussin de dossier est amovible une fois que le premier organe de clipsage solidaire du revêtement central est détaché de la seconde portion d'accrochage du profilé d'accroche solidaire du premier revêtement latéral et que le deuxième organe de clipsage solidaire du revêtement central est détaché de la seconde portion d'accrochage du profilé d'accroche solidaire du deuxième revêtement latéral.

Selon un mode de réalisation, le siège comprend un équipement choisi parmi :
- un équipement de chauffage comprenant un circuit électrique résistif,
- un équipement de ventilation comprenant un ventilateur, ,
- un équipement de massage comprenant un actionneur,
ledit équipement positionné en regard de la face arrière du coussin selon la présente divulgation lorsque la portion centrale de la matelassure est bloquée par le premier système de clipse et le deuxième système de clipse, ledit équipement étant configuré pour être inséré et retiré par l'ouverture d'accès laissée par la portion centrale lorsque retirée et alors que la première portion latérale et à la deuxième portion latérale restent fixées au châssis d'assise ou au châssis de dossier.

Selon un autre aspect, il est proposé un procédé de fabrication d'une matelassure d'un coussin selon la présente divulgation comprenant :
- /a/ la fourniture d'un moule dont les parois internes définissent la face avant, la face arrière, les faces latérales et les faces d'extrémité de la matelassure,
- /b/ une insertion dans le moule de la première portion de fil et de la deuxième portion fil,
- /c/ un moulage par une injection d'un produit moussé dans le moule en obtenant le surmoulage de la première portion de fil et de la deuxième portion de fil,
- /d/ un démoulage du produit moulé dans le moule par ouverture du moule,
et dans lequel on obtient la première fente et la deuxième fente :
- selon un première possibilité, lors du moulage en /c/ par la mise en place préalable de deux inserts en /b/, puis le retrait des deux inserts afin de libérer la première fente et la deuxième fente, ainsi que la première portion de fil et la deuxième portion de fil destinées à être agrippées par le système de clipsage ,
- selon une seconde possibilité après démoulage en /d/ par la mise en place de deux découpes afin de libérer la première portion de fil et la deuxième portion de fil destinées à être agrippées par le système de clipsage ou encore,
- selon une troisième possibilité en combinant la première possibilité et la deuxième possibilité, les inserts permettant de former la première fente et la deuxième fentes en partie seulement, les deux découpes assurant la finalisation des première et deuxième fentes .

. Selon un autre aspect, il est proposé un procédé de modernisation d'un siège de véhicule selon la présente divulgation, intégré dans un véhicule automobile, fixé par le châssis d'assise à un plancher du véhicule, sans démontage .du siège du plancher et dans lequel pour le coussin d'assise et/ou le coussin de dossier dans lequel :
- /A/ on détache le premier système de clipse et le deuxième système de clipse respectivement de la première portion de fil et de la deuxième portion de fil, et on retire la portion centrale de la matelassure de sorte à dégager une ouverture d'accès entre la première portion latérale et à la deuxième portion latérale fixées au châssis d'assise ou châssis de dossier du siège,
- /B/ on insère au travers de l'ouverture d'accès dans une armature du siège un équipement choisi parmi un équipement de chauffage résistif, ou encore un équipement de massage , ou encore un équipement de ventilation,
- /C/ on referme l'ouverture d'accès en recouvrant l'équipement par la face arrière de la portion centrale et on attache le premier système de clipse et le deuxième système de clipse respectivement à la première portion de fil et à la deuxième portion de fil, de sorte à maintenir bloquée la portion centrale de la matelassure entre la première portion latérale et le deuxième portion latérale de la matelassure.

### Brève description des dessins

D'autres caractéristiques, détails et avantages apparaîtront à la lecture de la description détaillée ci-après, et à l'analyse des dessins annexés, sur lesquels :
**Fig. 1**

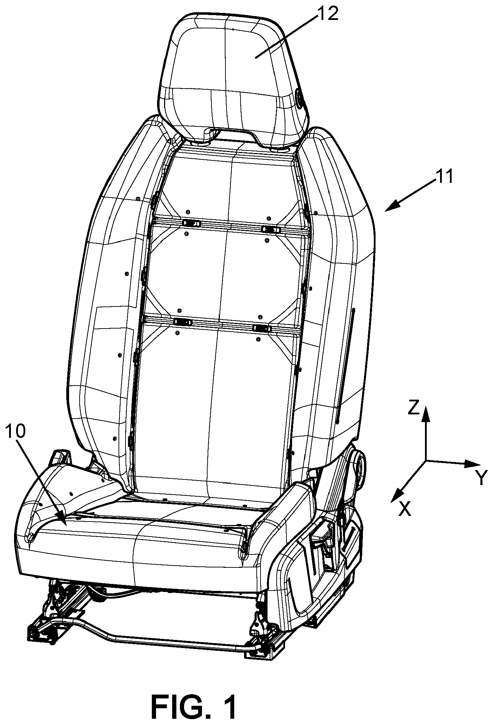

   [Fig. 1] montre un siège de véhicule automobile comprenant un châssis d'assise pourvu d'un coussin d'assise selon la présente divulgation et un châssis de dossier pourvu d'un coussin de dossier selon la présente divulgation.
**Fig. 2**

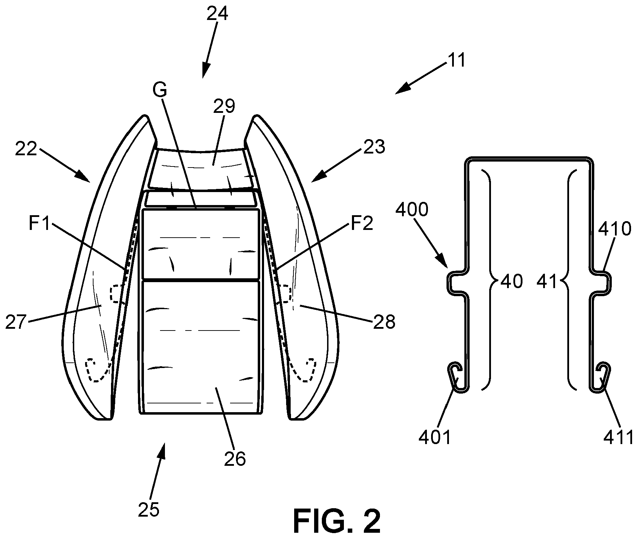

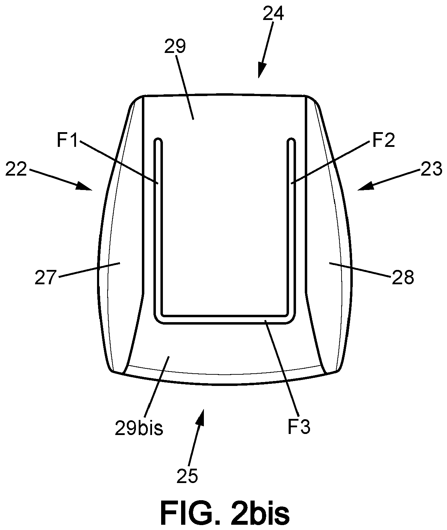

   [Fig. 2] est, à gauche, une vue de dessus de la matelassure d'un coussin de dossier, illustrant en pointillés, le fil rigide en insert, et à droite le fil rigide seul, en U, y compris la première portion de fil et la deuxième portion de fil.
**Fig. 2bis**
   [Fig. 2bis] est une vue de dessus de la matelassure d'un coussin de dossier, en alternative à la réalisation de la figure 2.
**Fig. 3a**

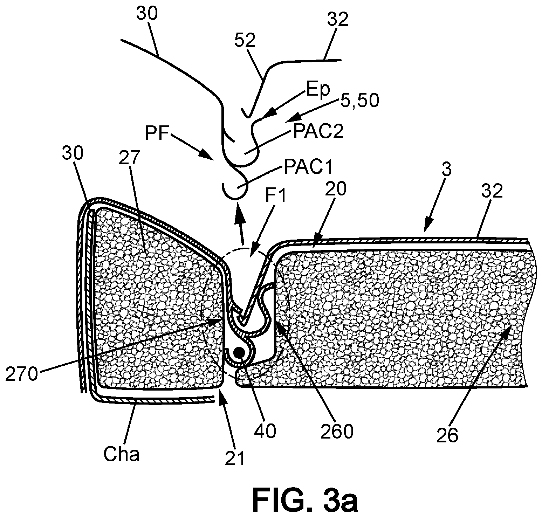

   [Fig. 3a] est une vue illustrant en bas, la première portion latérale, recouverte par le premier revêtement latéral, la portion centrale, recouverte par le revêtement central, la première fente entre la première portion latérale et la portion centrale, ainsi que le premier système de clipse attaché à la première portion de fil, et en haut, une vue de détail du premier système de clipse lorsqu'un premier organe de clipsage solidaire du revêtement central est détaché d'un profilé d'accroche.
**Fig. 3b**

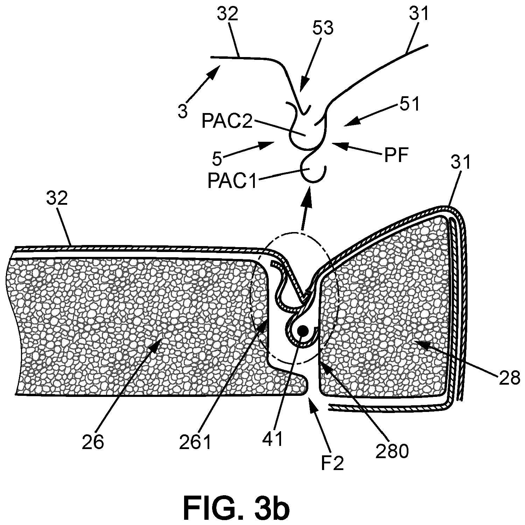

   [Fig. 3b] est une vue illustrant en bas, une coupe transversale illustrant la deuxième portion latérale, recouverte par le deuxième revêtement latéral, la portion centrale, recouverte par le revêtement central, la deuxième fente entre la deuxième portion latérale et la portion centrale, ainsi que le deuxième système de clipse attaché à la deuxième portion de fil, et en haut, une vue de détail du deuxième système de clipse lorsqu'un deuxième organe de clipsage solidaire du revêtement central est détaché d'un profilé d'accroche
**Fig. 4**

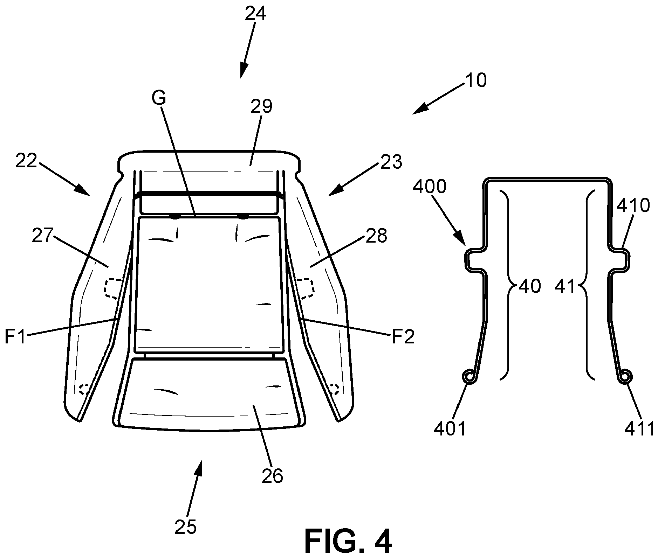

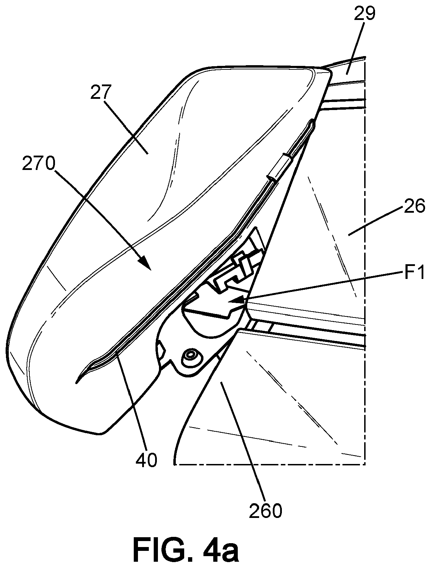

   [Fig. 4] est, à gauche, une vue de dessus de la matelassure d'un coussin d'assise, illustrant en pointillés, le fil rigide en insert, et à droite, le fil rigide seul, en U, y compris la première portion de fil et la deuxième portion de fil.
**Fig. 4a**
   [Fig. 4a] est une vue de coupe et partielle de le fente F1, lorsque la première portion latérale est écartée légèrement de la portion centrale, illustrant en particulier la première portion de fil saillante de la paroi interne.
**Fig. 5**

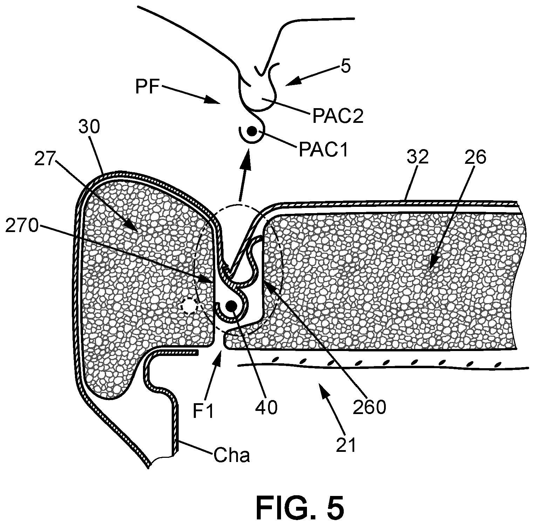

   [Fig. 5] est une vue illustrant en bas, une coupe transversale illustrant la première portion latérale, recouverte par le premier revêtement latéral, la portion centrale, recouverte par le revêtement central, la première fente entre la première portion latérale et la portion centrale, ainsi que le premier système de clipse attaché à la première portion de fil, et en haut, une vue de détail du premier système de clipse lorsque un premier organe de clipsage solidaire du revêtement central est détaché d'un profilé d'accroche.
**Fig. 6**

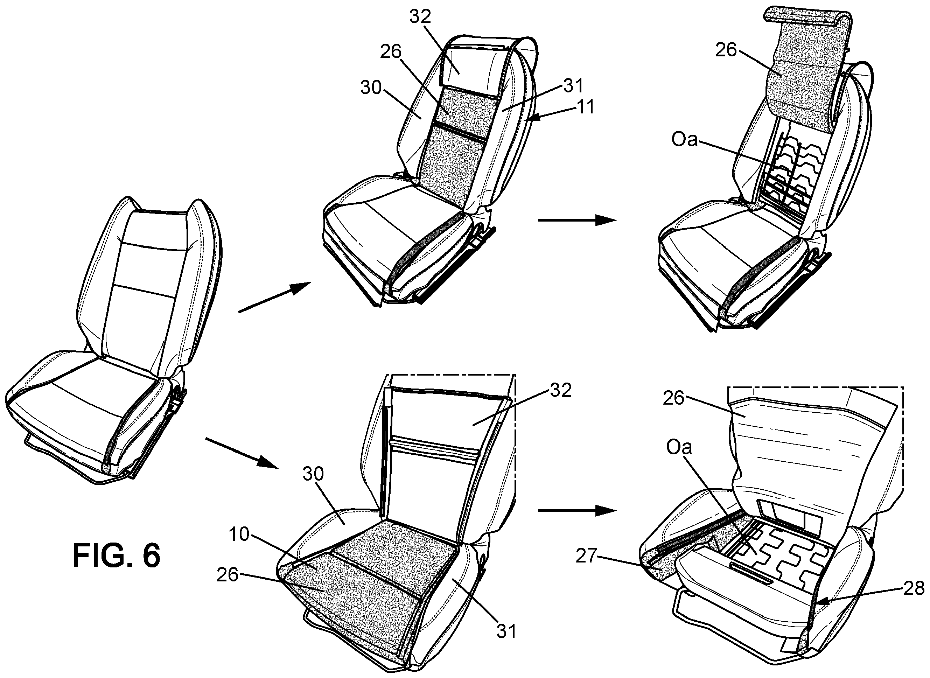

   [Fig. 6] est une illustration, à partir d'un siège comportant un coussin d'assise et un coussin de dossier selon la présente divulgation, divulguant :
   - en haut les étapes, permettant d'ouvrir une ouverture d'accès, par repliage du revêtement central et la portion centrale de la matelassure du coussin de dossier - - en bas, les étapes permettant d'ouvrir une ouverture d'accès, par repliage du revêtement central et de la portion centrale de la matelassure du coussin d'assise.
**Fig. 7**

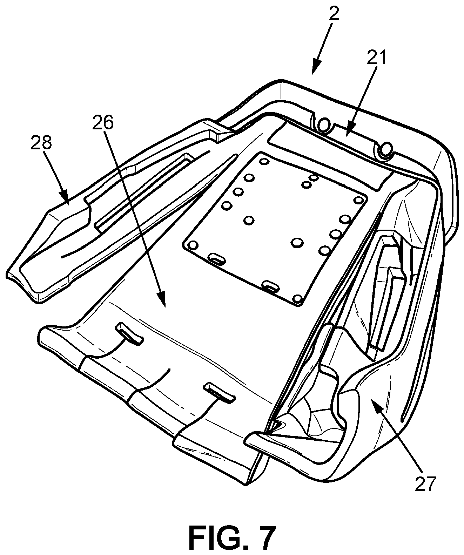

   [Fig. 7] montre une vue de la face arrière d'une matelassure d'un coussin de dossier selon la présente divulgation.
**Fig. 8a**

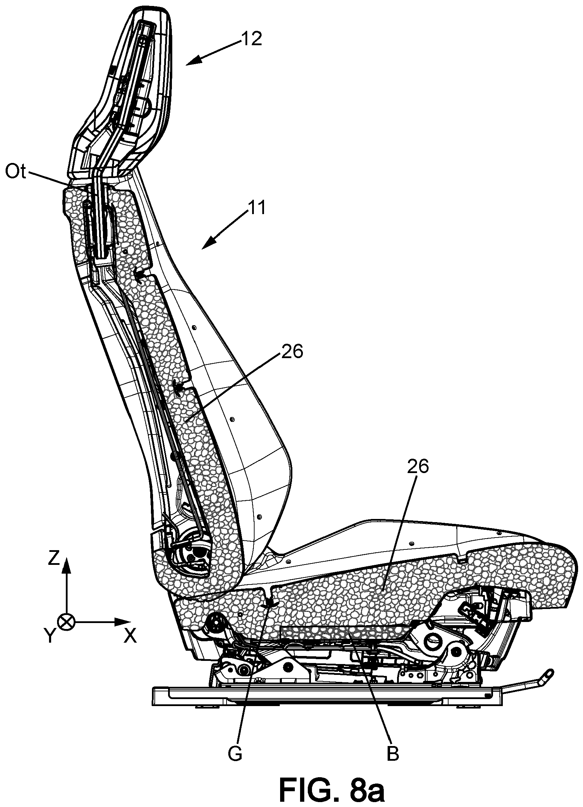

   [Fig. 8a] est une vue de coupe du siège selon un plan XZ, illustrant la portion centrale de la matelassure du coussin d'assise, en appui par la face arrière sur un bloc amovible en appui sur une armature du siège.
**Fig. 8b**

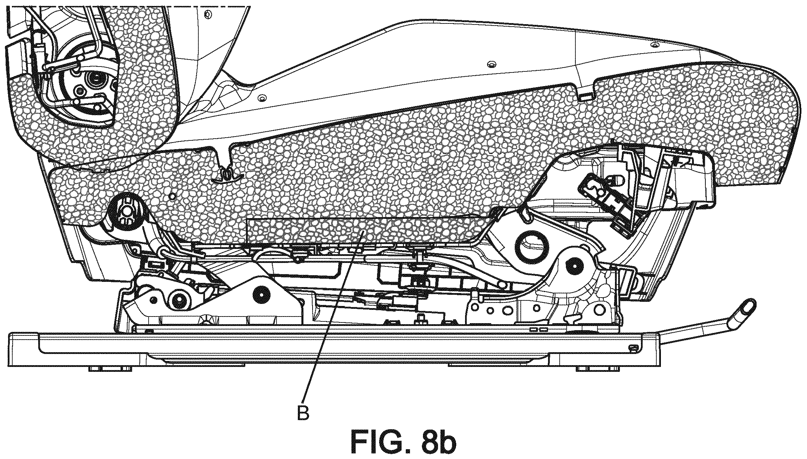

   [Fig. 8b] est une vue de détail de la figure 8a.
**Fig. 9a**

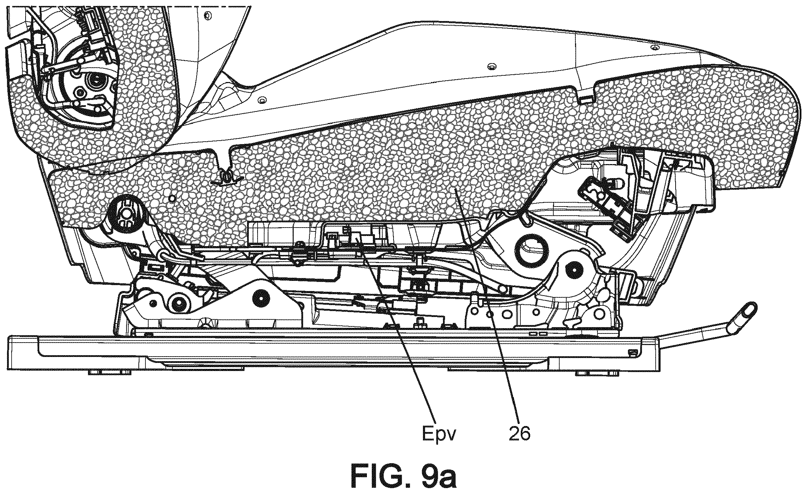

   [Fig. 9a] est une vue de détail de la figure 8a, après que le bloc amovible a été retiré au travers de l'ouverture d'accès, puis remplacé par un équipement de ventilation comprenant un ventilateur.
**Fig. 9b**

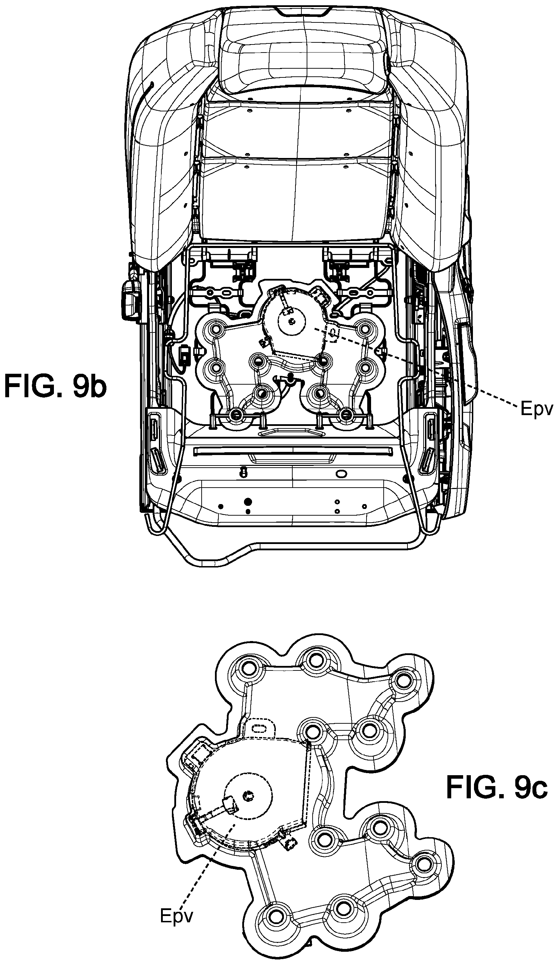

   [Fig. 9b] est une vue de dessus du siège, le coussin d'assise non illustré, illustrant l'équipement de ventilation.
**Fig. 9c**
   [Fig. 9c] est une vue de détail de l'équipement de ventilation, comprenant un ventilateur et sa platine assurant la fixation sur une armature ou un sommier du siège.
**Fig. 10a**

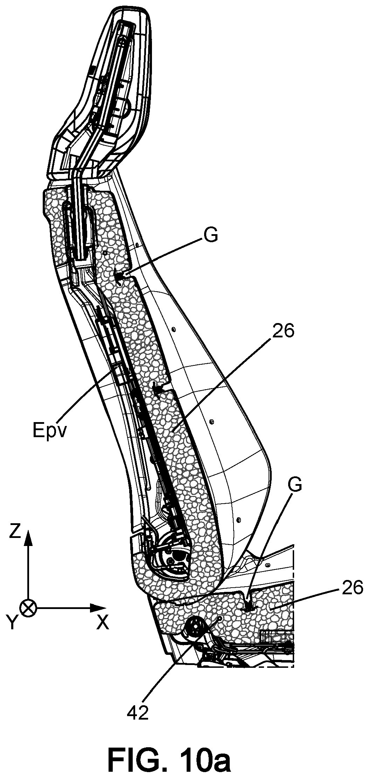

   [Fig. 10a] est une vue de coupe du siège selon un plan XZ, illustrant la portion centrale de la matelassure du coussin de dossier en regard d'un équipement de ventilation
**Fig. 10b**

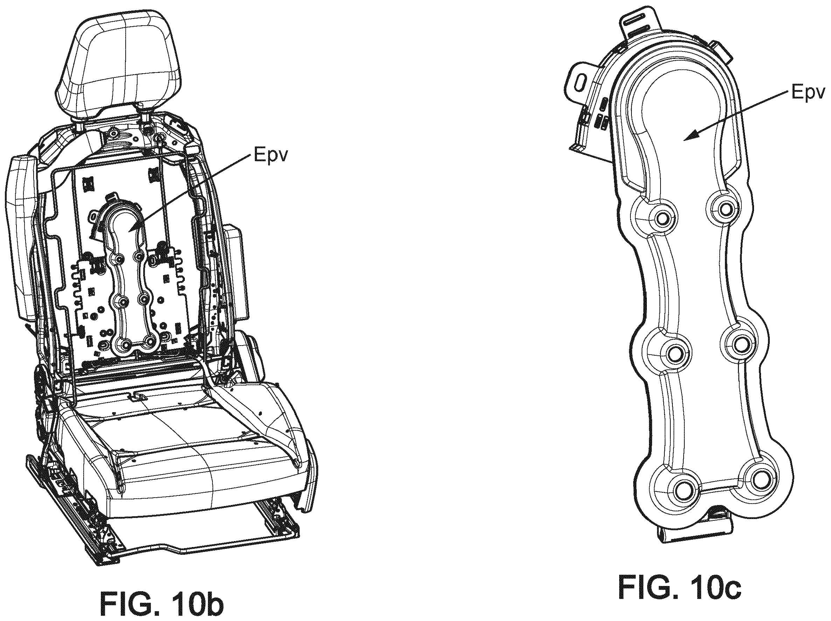

   [Fig. 10b] est une vue de dessus du siège, le coussin de dossier non illustré, illustrant l'équipement de ventilation.
**Fig. 10c**
   [Fig. 10c] est une vue de détail de l'équipement de ventilation, comprenant un ventilateur et sa platine assurant la fixation sur l'armature du siège.
**Fig. 11a**

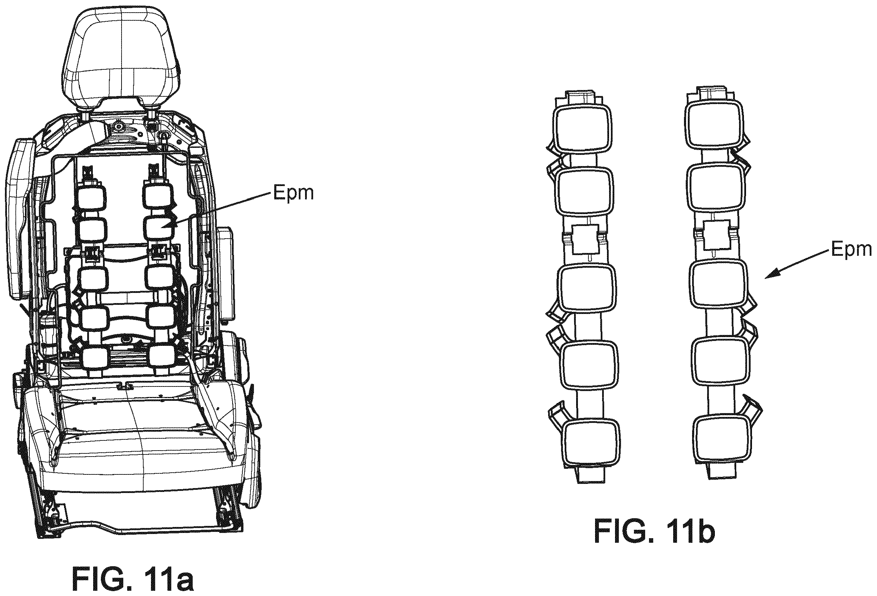

   [Fig. 11a] est une vue de dessus du siège, le coussin de dossier non illustré, illustrant un équipement de massage sur l'armature du dossier.
**Fig. 11b**
   [Fig. 11b] est une vue de détail de l'équipement de massage.
**Fig. 12a**

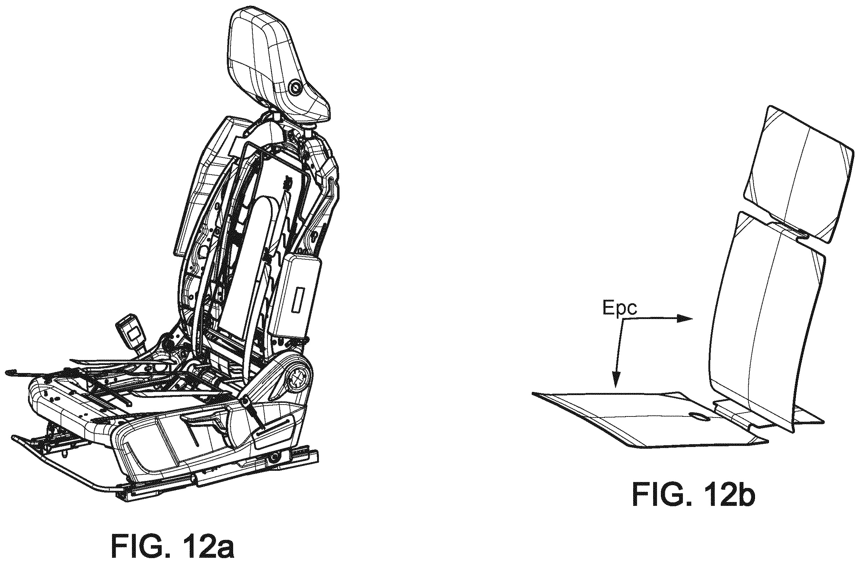

   [Fig. 12a] est une vue de dessus du siège, le coussin de dossier et le coussin d'assise non illustrés, illustrant un équipement de chauffage sur l'armature du dossier et sur l'armature de l'assise.
**Fig. 12b**
   [Fig. 12b] est une vue de détail illustrant l'équipement de chauffage sur l'armature du dossier et sur l'armature de l'assise.

### Description des modes de réalisation

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

Il est maintenant fait référence à la figure 1 qui illustre un siège de véhicule automobile dans un repère XYZ qui comporte un châssis d'assise typiquement solidarisé à un plancher de véhicule.

Le châssis d'assise peut être solidarisé au plancher par une paire de glissières. Chaque glissière peut comprendre un premier profilé solidarisé au plancher, et un deuxième profilé (ou un chariot), monté coulissant de manière réglable le long du premier profilé, solidarisé à une portion inférieure du châssis d'assise.

Le châssis d'assise peut comprendre, outre la portion inférieure solidaire des seconds profilés des glissières (ou solidaires des chariots), une portion supérieure.

Un système de réhausse peut être disposé entre la portion inférieure et la portion supérieure, pour assurer le réglage en hauteur de la portion supérieure du châssis d'assise par rapport à la portion inférieure.

Un coussin d'assise 10 est solidarisé sur la portion supérieure du châssis d'assise et assure le confort de l'assise de l'occupant du siège.

Ce coussin d'assise 10 s'étend ;
- en longueur, globalement suivant la direction X, ou une direction légèrement inclinée (par une légère rotation autour de Y) par rapport à la direction X, depuis un bord arrière jusqu'à un bord avant de l'assise,
- en largeur, transversalement, suivant la direction Y, suivant un premier bord latéral jusqu'à un second bord latéral de l'assise,
- en épaisseur, suivant la direction Z, ou une direction légèrement inclinée (par une rotation autour de Y) par rapport à la direction Z .

Ce coussin d'assise comprend une matelassure 2, typiquement moulée, notamment en un produit moussé (par exemple une mousse polyuréthane) recouverte par un revêtement 3 coiffant la matelassure d'assise.

Le revêtement peut comprendre un textile, un cuir, ou similicuir, maintenu sur la matelassure. Le revêtement est typiquement maintenu par ses bords en tension suffisante pour éviter la formation de pli.

Le siège comprend encore un dossier, y compris un châssis de dossier qui est solidarisé à sa partie inférieure sur la partie arrière du châssis inférieur, et de préférence sur la portion supérieure du châssis d'assise, notamment réglable en hauteur par le système de réhausse.

Un mécanisme de réglage peut être configuré pour assurer le réglage de l'inclinaison du châssis de dossier, par rotation autour d'un axe s'étendant suivant la direction Y.

Le dossier comporte encore un coussin de dossier 11, solidarisé au châssis de dossier.

Ce coussin de dossier 11 s'étend ;
- en longueur, globalement suivant la direction Z, ou une direction légèrement inclinée (par une légère rotation autour de Y) par rapport à la direction Z, depuis un bord inférieur jusqu'à un bord supérieur du dossier,
- en largeur, transversalement, suivant la direction Y, suivant un premier bord latéral jusqu'à un second bord latéral du dossier,
- en épaisseur, suivant la direction X, ou une direction légèrement inclinée (par une rotation autour de Y) par rapport à la direction X.

Le siège comporte encore un appui-tête 12 qui comprend un support de tête matelassé, et deux tiges s'étendant vers les bas parallèles entre elles. Les deux tiges sont insérées dans deux orifices Ot au niveau du bord supérieur de l'assise. Elles peuvent comprendre sur le longueur différents crans permettant le réglage de la hauteur de l'appui-tête 12 par rapport au dossier, destiné à coopérer avec un système de verrouillage sur le dossier. Le coussin d'assise et sa matelassure comprennent ainsi classiquement les deux orifices Ot pour les deux tiges de l'appui tête.

La présente divulgation concerne un coussin 1 pour siège de véhicule, tel qu'un coussin d'assise 10, et/ou un coussin de dossier 11.

Un tel coussin comprend :
- une matelassure 2 présentant une face avant 20 destinée à recevoir une partie de l'occupant, et une face arrière 21 destinée à venir en appui sur un châssis du siège, des faces latérales 22, 23, opposées, et des faces d'extrémités 24, 25, opposées
- un revêtement 3 recouvrant au moins la face avant 20, voire tout ou partie des faces latérale 22, 23 et/ou des faces d'extrémité 24, 25.

Dans le cas d'un coussin d'assise10, la matelassure 2 s'étend :
- en longueur globalement suivant la direction X, ou une direction légèrement inclinée (par une légère rotation autour de Y) par rapport à la direction X, depuis une première face d'extrémité 24 au niveau du bord arrière de l'assise jusqu'à une deuxième face d'extrémité 25 de la matelassure au niveau du bord avant de l'assise,
- en largeur, transversalement, suivant la direction Y, depuis une première face latérale 22 au niveau du premier bord latéral de l'assise jusqu'à une deuxième face latérale 23 de la matelassure, au niveau du deuxième bord latéral de l'assise,
- en épaisseur suivant la direction Z, ou une direction légèrement inclinée (une direction légèrement incliné (par une rotation autour de Y) par rapport à la direction Z , depuis la face arrière jusqu'à la face avant.

Dans le cas d'un coussin de dossier 11, la matelassure 2 s'étend :
- en longueur globalement suivant la direction Z, ou une direction légèrement inclinée (par une légère rotation autour de Y) par rapport à la direction Z, depuis une première face d'extrémité 24 au niveau du bord supérieur du dossier jusqu'à une deuxième face d'extrémité 25 de la matelassure au niveau du bord inférieur du dossier,
- en largeur, transversalement, suivant la direction Y, depuis une première face latérale 22 au niveau d'un premier bord latéral du dossier jusqu'à une deuxième face latérale 23 de la matelassure au niveau d'un deuxième bord latéral du dossier,
- en épaisseur suivant la direction X, ou une direction légèrement inclinée (une direction légèrement incliné (par une rotation autour de Y) par rapport à la direction X , depuis la face arrière jusqu'à la face avant.

Ce coussin de dossier comprend une matelassure 2, typiquement moulée, notamment en un produit moussé (par exemple une mousse polyuréthane), recouverte par un revêtement 3 coiffant la matelassure.

Le revêtement peut comprendre un textile, un cuir, ou simili-cuir, maintenu sur la matelassure. Le revêtement est typiquement maintenu par ses bords en tension suffisante pour éviter la formation de pli.

Selon la présente divulgation, la matelassure 2 (en particulier la matelassure du coussin de l'assise 10 ou encore du coussin du dossier 11) comprend une première fente F1 et une deuxième fente F2, s'étendant chacune en longueur suivant au moins une section de longueur du coussin entre les deux faces d'extrémité 24,25 de la matelassure, la première fente F1 et la deuxième fente F2 étant respectivement traversantes depuis la face avant 20 jusqu'à la face arrière 21 de la matelassure.

De manière notable, la première fente F1 et la deuxième fente F2 divisent la matelassure 2 suivant la direction transversale, selon la direction Y, en trois portions, y compris une portion centrale 26, une première portion latérale 27 et une deuxième portion latérale 28. La surface avant de la matelassure au niveau de la première portion latérale 27 et la surface avant de la matelassure au niveau la deuxième portion latérale 28 peuvent s'étendre en saillie de manière relevée par rapport à la surface avant de la matelassure au niveau de la portion centrale 26. Ainsi, la première portion latérale 27 et la deuxième portion latérale 28 sont configurées pour assurer un maintien latéral de la partie du corps de l'occupant en appui sur la portion centrale 26.

La première fente F1 est délimitée entre une paroi interne 270 de la première portion latérale 27 et une première paroi externe 260 de la portion centrale 26, et comme illustrée à titre d'exemple à la figure 3a. La deuxième fente F2 est délimitée entre une paroi interne 280 de la deuxième portion latérale 28 et une deuxième paroi externe 261 de la portion centrale 26. Les deux parois externes 260, 261 de la portion centrale 26 sont opposées l'une par rapport à l'autre, et comme visibles aux figures.

De manière notable également :
- une première portion de fil 40, rigide, est solidaire de la première portion latérale 27 et s'étend au niveau de la première fente F1, le long de la paroi interne 270 de la première portion latérale 27, et,
- une deuxième portion de fil 41 rigide, est solidaire de la deuxième portion latérale 28 et s'étend au niveau de la deuxième fente F2, le long de la paroi interne 280 de la deuxième portion latérale 28.

Selon la présente divulgation, le coussin comprend un système de clipsage 5 avec un premier système de clipse 50 au niveau de la première paroi externe 260, configuré pour venir se fixer de manière réversible sur la première portion de fil 40, et un deuxième système de clipse 51 au niveau de la deuxième paroi externe 261 configuré pour venir se fixer de manière amovible sur la deuxième portion de fil 41.

Le premier système de clipse 50 et le deuxième système de clipse 51 assurent le maintien de la portion centrale 26 de la matelassure entre la première portion latérale 27 et la deuxième portion latérale 28.

On entend par maintien de la portion centrale 26 de la matelassure entre la première portion latérale 27 et la deuxième portion latérale 28, le fait que le système de clipsage 50, interdit le retrait de la portion centrale qui reste bloquée dans l'inter-espace entre la première portion latérale 27 et la deuxième portion latérale 28, par le premier système de clipse 50 attaché sur la première potion de fil 40 et le deuxième système de clipse 51 attaché sur la deuxième portion de fil 41. La portion centrale de la matelassure est ainsi bloquée contre un sommier de l'assise (ou du dossier) et ne peut pas être relevée pour être retirée.

Un tel système de clipsage assure avantageusement un maintien fiable de la portion centrale entre les deux portions latérales 27,28 lorsque accroché aux deux portions de fil, première portion de 40 et deuxième portion de fil 41, et est compatible avec les exigences en termes de tenue et résistance à l'usage des constructeurs.

Lorsque le premier système de clipse 50 et le deuxième système de clipse 51 sont détachés respectivement de la première portion de fil 40 et de la deuxième portion de fil 41, la portion centrale 26 de matelassure est libérée, configurée pour être amovible par rapport à la première portion latérale 27 et à la deuxième portion latérale 28 en dégageant une ouverture d'accès Oa entre ladite première portion latérale 27 et ladite deuxième portion latérale 28 alors destinées à rester fixées au châssis du siège. Lorsque les deux systèmes de clipse 50,51 sont détachés, la portion centrale libérée peut-être retirée, par écartement du sommier de l'assise ou du dossier.

Lorsque le coussin est un coussin de dossier, le déplacement de la portion centrale 26, notamment par pliage permet de dégager l'ouverture d'accès Oa, par exemple en vue de l'ajout au sein du dossier d'un équipement qui peut être un équipement de ventilation, un équipement de massage, ou encore un équipement de chauffage.

Lorsque le coussin est un coussin d'assise, le déplacement de la portion centrale 26, notamment par pliage permet de dégager l'ouverture d'accès Oa, et par exemple en vue de l'ajout au sein de l'assise d'un équipement qui peut être un équipement de ventilation, ou encore un équipement de chauffage

Ces opérations de modernisation peuvent être mises en oeuvre, avantageusement dans un véhicule, sans démontage du siège du plancher du véhicule.

Selon un mode de réalisation illustré à la figure 2 pour le coussin de dossier, et à la figure 4 pour le coussin d'assise, la première fente F1 et la deuxième fente F2 s'étendent en longueur entre les deux faces d'extrémité 24,25, par exemple de manière parallèle, et seulement partiellement sur la longueur de la matelassure. La portion centrale 26, d'une part, et la première portion latérale 27 et la deuxième portion latérale28, d'autre part, peuvent être ainsi attenantes à une portion d'extrémité 29 de la matelassure dépourvue desdites première et deuxième fentes. La portion d'extrémité 29 s'étend sur la largeur des trois portions 26,27,28, selon la direction Y.

Les fait que les trois portions (la première et deuxième portions latérales 27, 28, ainsi que la portion centrale 26) soient attenantes à une même portion d'extrémité procure certains avantages tels que :
- un meilleur comportement à l'usage, en termes de tenue et de résistance aux sollicitions mécaniques lors des appuis successifs de l'occupant, par comparaison à une fabrication pour laquelle les trois portions sont totalement distinctes, non liées entre elles,
- une fabrication simplifiée en ce que les trois portions (la première et deuxième portions latérales 27, 28, la portion centrale 26, ainsi que la portion d'extrémité) peuvent être fabriquées par un corps d'un seul tenant, notamment en un produit moussé tel que de la mousse polyuréthane lors d'une même opération de moulage.

La portion centrale 26 de la matelassure est alors configurée pour être amovible par rapport à la première portion latérale 27 et à la deuxième portion latérale 28 alors destinées à rester fixées au châssis du siège, par pliage de la matelassure, une fois le premier système de clipse 50 et le deuxième système de clipse 51 détachés respectivement de la première portion de fil 40 et de la deuxième portion de fil 41.

Le pliage de la portion centrale 26 autorise le dégagement de l'ouverture d'accès Oa définie entre la paroi interne 270 de la première portion latérale 27 et la paroi interne 280 de la deuxième portion latérale, et comme illustré en haut à droite de la figure 6 pour le dossier, ou encore en bas à gauche de la figure 6 pour l'assise.

Une gorge G peut s'étendre transversalement sur la face avant de la matelassure, au moins sur la largeur de la portion centrale 26 au niveau d'une zone de jonction entre la portion centrale26 et ladite portion d'extrémité 29. Cette gorge G réduit l'épaisseur de la matelassure, localement, et facilite ainsi le pliage de la matelassure, par pliage autour de l'axe de la gorge G.

Selon un mode de réalisation, la première fente F1 et la deuxième fente F2 s'étendent en longueur partiellement sur la longueur de la matelassure, en laissant ladite portion d'extrémité 29 à laquelle sont attenantes, la portion centrale 26, d'une part, et la première portion latérale 27 et la deuxième portion latérale 28, d'autre part.

La portion d'extrémité 29 porte l'une des deux faces d'extrémité, dite première face d'extrémité 24, et comme illustré à la figure 2 pour le coussin de dossier, ou encore à la figure 4 pour le coussin d'assise.

Selon un mode de réalisation illustré à la figure 2 ou 4, la première fente F1 et la deuxième fente F2 peuvent s'étendre jusqu'à l'autre face des deux faces d'extrémités, dite deuxième face 25 d'extrémité, la première fente F1 et la deuxième fentes F2 étant débouchantes au travers de la deuxième face d'extrémité 25.

Selon une autre possibilité illustrée schématiquement à la figure 2bis pour le coussin d'assise (et qui peut être mise en oeuvre pour le coussin de dossier), la première fente F1 et la deuxième fente F2 peuvent ne pas s'étendre jusqu'à la deuxième face 25. Dans un tel cas la première portion latérale 27 et la deuxième portion latérale 28 sont attenantes à une seconde portion d'extrémité 29bis portant la deuxième face 25, et alors qu'une troisième fente F3 joignant la première fente F1 et la deuxième fente F2 sépare une extrémité libre de la portion centrale 26 et cette deuxième portion d'extrémité 29bis.

Selon un mode de réalisation, la première portion de fil 40 s'étendant le long de la première fente F1 présente des portions de longueur 400, 401, courbes, surmoulées dans la première portion latérale 27 et des portions de longueur saillantes de la paroi interne 270 de la première portion latérale 27 servant d'accroche à la fixation du revêtement et/ou du premier système de clipse 50.

De même la deuxième portion de fil 41 s'étendant le long de la deuxième fente F2 présente des portions de longueur 410, 411, courbes, surmoulées dans la deuxième portion latérale 28 et des portions de longueur saillantes de la paroi interne 280 de la deuxième portion latérale 28 servant d'accroche à la fixation du revêtement et/ou du deuxième système de clipse 51. Les portions de longueur saillantes s'étendent de préférence de manière rectiligne le long de la première fente F1 pour la première portion de fil 40, et le long de la deuxième fente F2 pour la deuxième portion de fil 41.

Selon un mode de réalisation illustré notamment à la figure 2 ou à la figure 4, un même fil, rigide, de forme générale en U constitue la première portion de fil 40 et la deuxième portion de fil 41, d'une part, constituées par les deux ailes verticales du U, solidarisées respectivement à la première portion latérale 27 et la deuxième portion latérale 28, et d'autre part, une section de longueur intermédiaire 42 formant l'aile horizontale du U qui est surmoulée par la portion d'extrémité 29 de la matelassure.

Selon un mode de réalisation le revêtement 3, est divisé, transversalement, au moins sur la longueur de la matelassure portant la première fente F1 et la deuxième fente F2 en :
- un premier revêtement latéral 30 destiné à venir recouvrir au moins la face avant de la première portion latérale 27 de la matelassure,
- un deuxième revêtement latéral 31 destiné à venir recouvrir au moins la face avant de la deuxième portion latérale28 de la matelassure,
- un revêtement central 32 destiné à venir recouvrir la portion centrale 26 de la matelassure.

Ces trois revêtement 30,31,32 peuvent être attenants à un même revêtement d'extrémité coiffant la portion d'extrémité 29.

De préférence :
- le premier revêtement latéral 30 est accroché à la première portion de fil 40 pour assurer son maintien en tension sur la première portion latérale 27,
- le deuxième revêtement latéral 31 est accroché à la deuxième portion de fil 41 pour assurer son maintien en tension sur la deuxième portion latérale 28.

Le première revêtement latéral 30 est accroché par le bord opposé à celui accroché sur la première portion de fil 40, au châssis notamment du dossier ou de l'assise. Le deuxième revêtement latéral 31 est accroché par le bord opposé à celui accroché sur la première portion de fil 40, au châssis notamment du dossier ou de l'assise. L'accrochage du premier revêtement 30 sur la première portion de fil 40 et du deuxième revêtement 31 sur la deuxième portion de fil 41 permet d'assurer le maintien du coussin, en l'espèce de la première portion latérale 27 et de la deuxième portion latérale sur le châssis d'assise Cha ou de dossier.

De manière notable le revêtement central 32 est accroché de manière réversible par le premier système de clipse 50 sur la première portion de fil 40 et par le deuxième système de clipse 51 sur la deuxième portion de fil 41, en étant configuré pour assurer le maintien en tension du revêtement central 32 sur la portion centrale 26 avec ledit maintien de la portion centrale 26 bloquée entre la première portion latérale 27 et la deuxième portion latérale 28. Une fois le revêtement central 32 ainsi accroché, il interdit le relevage de la portion centrale 26 de la matelassure.

Le revêtement central 32 est configuré pour autoriser le dégagement de l'ouverture d'accès Oa après détachement du premier système de clipse 50 et du second système de clipse 51 : on libère tout d'abord le revêtement central 32, et ainsi que la portion centrale 26, puis on retire le revêtement central 32 et de la portion centrale 32 notamment par pliage pour libérer l'ouverture d'accès Oa entre les deux portions latérales 27,28.

A cet effet, le système de clipsage 5, en particulier le premier système de clipse 50 et le deuxième système de clipse 51 comprend :
- un (ou plusieurs) profilé d'accroche PF solidaire du premier revêtement latéral 30 qui comprend une première portion d'accrochage PAC1 venant s'accrocher sur la première portion de fil 40,
- un (ou plusieurs) profilé d'accroche PF solidaire du deuxième revêtement latéral 31 qui comprend une première portion d'accrochage PAC1 venant s'accrocher sur la deuxième portion de fil 41.

Aux figures 3a, 3b ou 5, on constate que la première portion d'accrochage PAC1 peut être une (première) gorge du profilé, en particulier constituée par une partie élastiquement déformable du profilé d'accroche PF recevant en l'accrochant la portion de fil en l'espèce la première portion de fil 40, ou la deuxième portion de fil 41.

Selon un mode de réalisation :
- le premier système de clipse 50 comprend une seconde portion d'accrochage PAC2 du profilé d'accroche PF (alors accroché sur la première portion de fil 40 solidaire de la première portion latérale 27) ainsi qu'un premier organe de clipsage 52 solidaire du revêtement central 32 configuré pour venir se fixer de manière réversible dans la seconde portion d'accrochage PAC2, alors que la première portion d'accrochage PAC1 du profilé d'accroche PF est en prise avec la première portion de fil 40,
- le deuxième système de clipse 51 comprend une seconde portion d'accrochage PAC2 du profilé d'accroche PF (alors accroché sur la deuxième portion de fil 41 solidaire de la deuxième portion latérale 28), ainsi qu'un deuxième organe de clipsage 53 solidaire du revêtement central 32 configuré pour venir se fixer de manière réversible dans la seconde portion d'accrochage PAC2, alors que la première portion d'accrochage PAC1 du profilé d'accroche PF est en prise avec la deuxième portion de fil 41.

Comme visible, à la figure 3a, 3b ou 5, la seconde portion d'accroche PAC2 peut être constituée par une seconde gorge du profilé superposée à la première gorge de la première portion d'accrochage PAC1, la seconde gorge débouchant vers le dessus.

Selon ce mode de réalisation :
- on entend que le premier système de clipse 50 est attaché à la première portion de fil 40 lorsque le premier organe de clipsage 52 est clipsé dans la seconde portion d'accrochage PAC2, comme visible en bas de la figure 3a,
- on entend que le premier système de clipse 50 est détaché de la première potion de fil 40, de manière à autoriser la libération du revêtement central 32 et de la portion centrale 26 lorsque le premier organe de clipsage 52 est détaché de la seconde portion d'accrochage PAC2 du profilé d'accroche, et comme visible en haut à la figure 3a;
- on entend que le deuxième système de clipse 51 est attaché à la deuxième portion de fil 41 lorsque le deuxième organe de clipsage 53 est clipsé dans la seconde portion d'accrochage PAC2, comme visible en bas de la figure 3b,
- on entend que le deuxième système de clipse 51 est détaché de la deuxième potion de fil 41, de manière à autoriser la libération du revêtement central 32 et de la portion centrale 26 lorsque le deuxième organe de clipsage 53 est détaché de la seconde portion d'accrochage PAC2 du profilé d'accroche, et comme visible en haut à la figure 3b ;

Le premier organe de clipsage 52 (ou le deuxième organe de clipsage 53) peut être lui-même un profilé, notamment de section rectiligne, présentant à son extrémité libre une dent d'accroche orientée vers l'arrière. L'insertion du premier organe d'accrochage 52 (respectivement le deuxième organe d'accrochage 53) dans la gorge de la seconde portion d'accrochage du profilé, provoque la déformation élastique de la gorge jusqu'à ce que la dent d'accroche du premier organe 52 (resp du deuxième organe d'accrochage 53) vienne accrocher une dent de la gorge. L'élasticité de la gorge assure un appui sur le profilé du premier organe d'accrochage 52 (resp second organe d'accrochage) de sorte à maintenir l'engagement entre les dents interdisant le retrait du premier organe d'accrochage 52

Le retrait du premier organe de clipsage 52 de la gorge du profilé d'accroche PF est assuré par l'opérateur. Pour ce faire, l'opérateur appuie d'une main sur une extrémité de préhension Ep du profilé d'accroche PF qui permet d'ouvrir la gorge de la seconde portion d'accrochage PAC2, et saisit le premier organe d'accrochage 52 (resp. le second organe d'accrochage 53) de l'autre main de sorte à dégager les dents, et extraire ainsi l'organe d'accrochage 52 ou 53 en dehors de la gorge de la seconde portion d'accrochage PAC2.

Selon un mode de réalisation, la matelassure 2, y compris la première portion latérale 27, la deuxième portion latérale 28 et la portion centrale 26 est un corps moulé obtenu par moulage d'un produit moussé, en particulier une mousse de polyuréthane.

Selon un mode de réalisation, la première fente F1 et la deuxième fente F2 sont obtenues au moins en partie respectivement par une première coupe et une deuxième coupe, en particulier dans le corps moulé. Alternativement, la première fente F1 et la deuxième fente F2 peuvent être obtenues au moins en partie par l'ajout d'inserts venant recouvrir la partie saillante de la première portion de fil 40 et la partie saillante de la deuxième portion de fil 41. Ces inserts sont retirés lors ou après démoulage de la matelassure.

Aussi, la présente divulgation concerne encore un procédé de fabrication d'une matelassure d'un coussin selon la présente divulgation, notamment un coussin d'assise, ou encore un coussin de dossier.

Le procédé de fabrication comprenant :
- /a/ la fourniture d'un moule notamment en deux parties, dont les parois internes définissent la face avant, la face arrière, les faces latérales et les faces d'extrémité de la matelassure,
- /b/ une insertion dans le moule de la première portion de fil 40 et de la deuxième portion fil 41, notamment par insertion du fil de forme en U,
- /c/ un moulage par une injection d'un produit moussé dans la moule en obtenant le surmoulage de la première portion de fil 40 et de la deuxième portion de fil 41, (voire le surmoulage de la portion de fil intermédiaire 42 du fil en U),
- /d/ un démoulage du produit moulé dans le moule par ouverture du moule.

Selon ce procédé on obtient la première fente F1 et la deuxième fente F2, lors du moulage en /c/ par la mise en place préalable de deux inserts en /b/, puis le retrait des deux inserts afin de libérer la première fente F1 et la deuxième fente F2, ainsi que la première portion de fil 40 et la deuxième portion de fil 41 destinées à être agrippées par le système de clipsage 5. Les inserts peuvent notamment être en silicone et présenter chacun une gorge destinée à recevoir les portions saillantes de première et deuxième portion de fil 40, 41. Les inserts sont retirés lors du démoulage en /d/.

Alternativement, on obtient la première fente F1 et la deuxième fente F2 , après démoulage en /d/ par la mise en place de deux découpes afin de libérer la première portion de fil 40 et la deuxième portion de fil 41 destinées à être agrippées par le système de clipsage 5.

Les deux possibilités peuvent encore être combinés, à savoir que selon une troisième possibilité, les inserts peuvent permettre de former la première fente F1 et la deuxième fentes F2 en partie seulement, les deux découpes assurant la finalisation des fentes F1, et F2.

La présente divulgation concerne encore un siège de véhicule comprenant un châssis d'assise et un châssis de dossier, un coussin d'assise 10 solidaire du châssis d'assise destiné à recevoir la partie basse du corps de l'occupant et un coussin de dossier 11 solidaire du châssis de dossier, destiné à recevoir la partie haute du corps de l'occupant, et en particulier un siège tel que décrit en référence à la figure 1.

Selon la présente divulgation ledit coussin d'assise 10 est un coussin selon la présente divulgation, et/ou le coussin de dossier 11 est un coussin selon la présente divulgation.

Le coussin d'assise ou de dossier, comprend le système de clipsage 5 avec le premier système de clipse 50 au niveau de la première paroi externe 260, configuré pour venir se fixer de manière réversible sur la première portion de fil 40 et le deuxième système de clipse 51 au niveau de la deuxième paroi externe 261 configuré pour venir se fixer de manière amovible sur la deuxième portion de fil 41 en assurant la maintien de la portion centrale 26 de la matelassure bloquée entre la première portion latérale 27 et la deuxième portion latérale 28.

Lorsque le premier système de clipse 50 et le deuxième système de clipse 51 sont détachés respectivement de la première portion de fil 40 et de la deuxième portion de fil 41, la portion centrale 26 de matelassure est libérée configurée pour être amovible par rapport à la première portion latérale 27 et à la deuxième portion latérale 28 en dégagent une ouverture d'accès Oa entre ladite première portion latérale 27 et ladite deuxième portion latérale 28 alors fixées au châssis d'assise ou de dossier du siège .

Le coussin d'assise 10 ou le coussin de dossier du siège peut encore comprendre
- le premier revêtement latéral 30 qui est accroché à la première portion de fil 40 pour assurer son maintien en tension sur la première portion latérale 27,
- le deuxième revêtement latéral 31 qui est accroché à la deuxième portion de fil 41 pour assurer son maintien en tension sur la deuxième portion latérale 28 ;
- le revêtement central 32 qui est accroché de manière réversible par le premier système de clipse 50 sur la première portion de fil 40 et par le deuxième système de clipse 51 sur la deuxième portion de fil 41. Le revêtement central 32 ainsi accroché est configuré pour assurer le maintien en tension du revêtement central 32 sur la portion centrale 26avec ledit maintien de la portion centrale 26 bloquée entre la première portion latérale 27 et la deuxième portion latérale 28.

Le revêtement central 32 est configuré pour autoriser le dégagement de l'ouverture d'accès Oa après détachement des premier et second systèmes de clipse 50,51 libérant le revêtement central 32 et la portion centrale 26, puis en autorisant le retrait du revêtement central 32 et de la portion centrale 26. Le deuxième revêtement latéral 31 est accroché par le bord opposé à celui accroché sur la première portion de fil 40, au châssis notamment du dossier ou de l'assise. L'accrochage du premier revêtement sur la première portion de fil 40 et du deuxième revêtement sur la deuxième portion de fil 41 permet d'assurer le maintien du coussin, en l'espèce de la première portion latérale 27 et de la deuxième portion latérale sur le châssis.

Selon un mode de réalisation du siège, :
- la première portion latérale 27 du coussin d'assise 10 et/ou du coussin de dossier 11 est fixée au châssis d'assise et/ou au châssis de dossier par le premier revêtement latéral 30, recouvrant ladite première portion latérale 27, et l'accroche de la première portion d'accrochage PAC1 du profilé d'accroche PF sur la première portion de fil 40 ,
- la deuxième portion latérale 28 du coussin d'assise 10 et/ou du coussin de dossier 11 est fixée au châssis d'assise et/ou au châssis de dossier par le deuxième revêtement latéral 31, recouvrant ladite deuxième portion latérale 28, et l'accroche de la première portion d'accrochage PAC1 du profilé d'accroche PF sur la deuxième portion de fil 41.

Selon un mode de réalisation du siège, la portion centrale 26 de la matelassure du coussin d'assise et/ou du coussin de dossier est amovible une fois que ;
- le premier organe de clipsage 52 solidaire du revêtement central 32 est détaché de la seconde portion d'accrochage PAC2 du profilé d'accroche solidaire du premier revêtement latéral 30 et,
- le deuxième de clipsage 53 solidaire du revêtement central 32 est détaché de la seconde portion d'accrochage PAC2 du profilé d'accroche solidaire du deuxième revêtement latéral 31.

La présente divulgation comprend encore un siège selon la présente divulgation, comprenant un équipement choisi parmi :
- un équipement de chauffage Epc comprenant un circuit électrique résistif,
- un équipement de ventilation Epv comprenant un ventilateur, en particulier un ventilateur à motorisé électrique
- un équipement de massage Epm comprenant un ou plusieurs actionneurs pneumatiques.

De manière notable ; ledit équipement est positionné en regard de la face arrière du coussin (d'assise ou de dossier) selon la présente divulgation lorsque la portion centrale 26 est bloquée par le système de clipsage 5 entre la première portion latérale 27 et la deuxième portion latérale 28 , ledit équipement étant configuré pour être inséré et retiré par l'ouverture d'accès Oa laissée par la portion centrale lorsque retirée et alors que la première portion latérale 27 et à la deuxième portion latérale 28 restent fixées au châssis d'assise ou au châssis de dossier.

Un tel équipement peut être inséré alors simplement et rapidement, et alors que le siège est toujours fixé par son châssis.

Enfin, la présente divulgation concerne encore un procédé de modernisation d'un siège de véhicule selon la présente divulgation intégré dans un véhicule automobile, fixé par le châssis d'assise à un plancher du véhicule, sans démontage .du siège du plancher et dans lequel pour le coussin d'assise 10 et/ou le coussin de dossier 11 dans lequel :
- /A/ on détache le premier système de clipse 50 et le deuxième système de clipse 51 respectivement de la première portion de fil 40 et de la deuxième portion de fil 41, et on retire la portion centrale 26 de la matelassure de sorte à dégager une ouverture d'accès Oa entre la première portion latérale 27 et à la deuxième portion latérale 28 fixées au châssis d'assise ou de dossier du siège,
- /B/ on insère au travers de l'ouverture d'accès Oa dans une armature du siège un équipement choisi parmi un équipement de chauffage résistif, ou encore un équipement de massage, ou encore un équipement de ventilation,
- /C/ on referme l'ouverture d'accès Oa en recouvrant l'équipement par la face arrière 21 de la portion centrale 26 et on attache le premier système de clipse 50 et le deuxième système de clipse 51 respectivement à la première portion de fil 40 et à la deuxième portion de fil 41 de sorte à maintenir bloquée la portion centrale 26 de la matelassure entre la première portion latérale 27 et le deuxième portion latérale 28 de la matelassure..

Le détachement et l'attache des premier et deuxième système de clipse 50, 51 peuvent mettre en oeuvre le profilé d'accroche PF, avec sa première portion d'accrochage PAC1 et sa deuxième portion d'accrochage PAC2, ainsi que les premier et deuxième organes d'accrochage 52, 53.

Ainsi, et partant d'un siège selon la figure 1 et vue de coupe de la figure 8a, (dépourvu d'équipement de massage, de chauffage ou de ventilation), le siège peut être avantageusement modernisé.

A la figure 8a, on remarque la portion centrale 26 de la matelassure est en appui par sa face arrière contre un bloc de mousse, bien visible à la figure 8b.

L'ouverture de l'ouverture d'accès Oa du coussin d'assise, comme visible en bas de la figure 6, permet de retirer le bloc en mousse B, et qui est remplacé par un équipement de ventilation Epv. Cet équipement de ventilation Epv comprend un ventilateur avec une turbine et un moteur électrique qui peut être raccordé électriquement à des fils d'alimentation électriques. Il est inséré au travers de l'ouverture d'accès Oa et fixé au siège

A la figure 10a, on remarque que l'équipement de ventilation peut être ajouté au dossier, après ouverture de l'ouverture d'accès Oa du coussin de dossier. Bien que non illustré, l'équipement de ventilation EPv peut remplacer un bloc de mousse amovible positionné entre une armature ou sommier du dossier et la surface arrière de la portion centrale 26 de la matelassure du coussin de dossier. Il est inséré au travers de l'ouverture d'accès Oa et fixé au siège.

A la figure 11a, on remarque que l'équipement de massage peut être ajouté au dossier, après ouverture de l'ouverture d'accès Oa du coussin de dossier.

Cet équipement comprend des actionneurs, notamment pneumatiques, notamment deux rangées d'actionneurs, agencés sur la hauteur du dossier. Ces actionneurs sont raccordés à des flexibles d'alimentation en air sous pression provenant d'un générateur d'air sous pression. Il est inséré au travers de l'ouverture d'accès Oa et fixé au siège

A la figure 12a et 12b, on remarque que l'équipement de chauffage peut être ajouté au dossier et ou à l'assise, après ouverture de l'ouverture d'accès Oa du coussin de dossier et/ou d'assise. L'équipement de chauffage peut comprendre une nappe chauffante, avec circuit résistif et des connexions électriques, et de préférence deux nappes chauffantes, l'une pour le dossier et l'autre pour l'assise. Une fois les connexions électriques raccordées électriquement à des fils d'alimentation, l'ouverture d'accès Oa peut être refermée.

### Avantages

La conception du coussin selon la présente divulgation qui comprend de manière notable une portion centrale 28 amovible et deux portions latérales 27,28 - première portion latérale 27 et deuxième portion latérale 28 - solidaires respectivement d'une première portion de fil 40 et deuxième portion de fil 41, rigides, ainsi qu'un système de clipsage 5 configuré pour bloquer la portion centrale 6 lorsque le système de clipsage est accroché aux portions de fils40,41 est avantageuse en ce qu'elle assure un maintien fiable de la portion centrale entre les deux portions latérales 27,28, compatible avec les exigences actuelles des constructeurs automobiles en termes de tenue et résistance à l'usage.

Le siège selon la présente divulgation est avantageusement évolutif, autorisant la mise en oeuvre du procédé de modernisation selon la présente divulgation.

Il devient possible d'acheter un véhicule automobile, avec une finition entrée de gamme, en particulier avec des sièges dépourvus de fonction de chauffage, de massage ou de ventilation, et de moderniser le siège aisément par la suite par l'ajout d'un tel équipement, aisément et à moindre coût, en limitant le temps de main d'oeuvre pour les opérations de modernisation qui peuvent être effectuées sans démonter le siège du plancher du véhicule.

### Liste des signes de référence

- 1 : Coussin,
- 10. Coussin d'assise,
- 11 Coussin de dossier,
- 12. Appui tête,
- 2. Matelassure
- 20. Face avant,
- 21. Face arrière,
- 22,23. Faces latérales,
- 24,25. Faces d'extrémité, respectivement une première face d'extrémité et une deuxième face d'extrémité,
- 26. Portion centrale,
- 260,261. Première paroi externe et deuxième paroi externe
- 27, 28. Première portion latérale et deuxième portion latérale,
- 270. Paroi interne (première portion latérale),
- 280. Paroi interne (deuxième portion latérale),
- 3. Revêtement,
- 30. Premier revêtement latéral (recouvrant la première portion latérale 27 de la matelassure),
- 31. Deuxième revêtement latéral (recouvrant la deuxième portion latérale 28 de la matelassure),
- 32. Revêtement central (recouvrant la portion centrale 26 de la matelassure)
- 4. Fil (rigide),
- 40. Première portion de fil,
- 41. Deuxième portion de fil,
- 5. Système de clipsage,
- 50. Premier système de clipse,
- 51. Deuxième système de clipse,
- 52 Premier organe d'accrochage
- 53 Deuxième organe d'accrochage,
- Cha. Châssis d'assise,
- G. Gorge (de pli),
- Oa. Ouverture d'accès,
- Ot. Orifices (pour le passage des tiges de l'appui tête)
- F1, F2. Première et deuxième fentes,
- F3. Troisième fente,
- PF. Profilé d'accroche
- PAC1 Première portion d'accrochage (pour la première portion de fil 40 ou la deuxième portion de fil 41),
- PAC2 Deuxième portion d'accrochage (pour le premier organe d'accrochage 52 ou le deuxième organe d'accrochage 53),
- Ep. Extrémité de préhension (pour ouvrir la gorge et assurer le retrait de l'organe d'accrochage constitué par le premier ou le deuxième organe d'accrochage),
- Epv. Equipement de ventilation,
- Epm. Equipement de massage,
- Epc. Equipement de chauffage.

.

## Revendications

1. Coussin (1) pour siège de véhicule comprenant :
- une matelassure (2) présentant une face avant (20) destinée à recevoir une partie de l'occupant, et une face arrière (21) destinée à venir en appui sur un châssis du siège, des faces latérales (22, 23), opposées, et des faces d'extrémités (24,25) , opposées
- un revêtement (3) recouvrant au moins la face avant (20), voire tout ou partie des faces latérale (22, 23) et/ou des faces d'extrémité (24, 25) ,
**caractérisé en ce que** la matelassure comprend une première fente (F1) et une deuxième fente (F2), s'étendant chacune en longueur suivant au moins un section de longueur du coussin entre les deux faces d'extrémité (24,25) de la matelassure,
la première fente (F1) et la deuxième fente (F2) étant respectivement traversantes depuis la face avant (20) jusqu'à la face arrière (21),
la première fente (F1) et la deuxième fente (F2) divisant la matelassure (2) suivant une direction transversale en trois portions, y compris une portion centrale (26),
une première portion latérale (27) et une deuxième portion latérale (28) disposées de part et d'autre de la portion centrale (26), la première fente (F1) délimitée entre une paroi interne (270) de la première portion latérale (27) et une première paroi externe (260) de la portion centrale (26), la deuxième fente (F2) délimitée entre une paroi interne (280) de la deuxième portion latérale et une deuxième paroi externe (261) de la portion centrale
et dans lequel une première portion de fil (40), rigide, solidaire de la première portion latérale (27) s'étend au niveau de la première fente (F1), le long de la paroi interne (270) de la première portion latérale (27), et une deuxième portion de fil (41) rigide, solidaire de la deuxième portion latérale (28) s'étend au niveau de la deuxième fente (F2), le long de la paroi interne (280) de la deuxième portion latérale (28), et dans lequel ledit coussin comprend un système de clipsage (5) avec un premier système de clipse (50) au niveau de la première paroi externe (260), configuré pour venir se fixer de manière réversible sur la première portion de fil (40), et un deuxième système de clipse (51) au niveau de la deuxième paroi externe (261) configuré pour venir se fixer de manière amovible sur la deuxième portion de fil en assurant la maintien de la portion centrale (26) de la matelassure bloquée entre la première portion latérale (27) et la deuxième portion latérale (28) et dans lequel lorsque le premier système de clipse (50) et le deuxième système de clipse (51) sont détachés respectivement de la première portion de fil (40) et de la deuxième portion de fil (41), la portion centrale (26) de matelassure est libérée, configurée pour être amovible par rapport à la première portion latérale (27) et à la deuxième portion latérale (28) en dégageant une ouverture d'accès (Oa) entre ladite première portion latérale (27) et ladite deuxième portion latérale (28) alors destinées à rester fixées au châssis du siège

2. Coussin selon la revendication 1, dans lequel la première fente (F1) et la deuxième fente (F2) s'étendent en longueur entre les deux faces d'extrémité (24,25) partiellement sur la longueur de la matelassure et de sorte que la portion centrale (26), d'une part, la première portion latérale (27) et la deuxième portion latérale (28), d'autre part, sont attenantes à une portion d'extrémité (29) de la matelassure dépourvue des première et deuxième fentes (F1, F2) et dans lequel la portion centrale de matelassure (26) est configurée pour être amovible par rapport à la première portion latérale (27) et à la deuxième portion latérale (28) alors destinées à rester fixées au châssis du siège, par pliage de la matelassure, une fois le premier système de clipse (50) et le deuxième système de clipse (51) détachés respectivement de la première portion de fil (40) et de la deuxième portion de fil (41).

3. Coussin selon la revendication 2, dans lequel une gorge (G) s'étend transversalement sur la face avant de la matelassure, au moins sur la largeur de la portion centrale (26) au niveau d'une zone de jonction entre la portion centrale (26) et ladite portion d'extrémité (29), la portion centrale (26) étant configurée être amovible par pliage autour de l'axe de la gorge (G)

4. Coussin selon la revendication 2 ou la revendication 3 ; dans lequel la première fente (F1) et la deuxième fente (F2) s'étendent en longueur partiellement sur la longueur de la matelassure, en laissant ladite portion d'extrémité (29) à laquelle sont attenantes, la portion centrale (26), d'une part, et la première portion latérale (27) et la deuxième portion latérale (28), d'autre part, la portion d'extrémité (29) portant l'une des deux faces d'extrémité, dite première face d'extrémité (24), et dans lequel la première fente (F1) et la deuxième fente (F2) s'étendent jusqu'à l'autre face des deux faces d'extrémités, dite deuxième face (25) d'extrémité, la première fente (F1) et la deuxième fentes (F2) étant débouchantes au travers de la deuxième face d'extrémité (25).

5. Coussin selon l'une des revendications 1 à 4, dans lequel :
- la première portion de fil (40) s'étendant le long de la première fente (F1) présente des portions de longueur (400, 401), courbes, surmoulées dans la première portion latérale (27) et des portions de longueur saillantes de la paroi interne (270) de la première portion latérale (27) servant d'accroche à la fixation du revêtement et/ou du premier système de clipse (50),
- la deuxième portion de fil (41) s'étendant le long de la deuxième fente (F2) présente des portions de longueur (410, 411), courbes, surmoulées dans la deuxième portion latérale (28) et des portions de longueur saillantes de la paroi interne (280) de la deuxième portion latérale (28) servant d'accroche à la fixation du revêtement et/ou du deuxième système de clipse (51).

6. Coussin selon l'une des revendications 2 seul, ou prise en combinaison avec l'une des revendications 3 à 5, dans lequel un même fil, rigide, de forme générale en U constitue la première portion de fil (40) et la deuxième portion de fil (41),d'une part, constituées par les deux ailes verticales du U, solidarisées respectivement à la première portion latérale (27) et la deuxième portion latérale (28), et d'autre part, une section de longueur intermédiaire (42) formant l'aile horizontale du U qui est surmoulée par la portion d'extrémité de la matelassure.

7. Coussin selon l'une des revendications 1 à 6 dans lequel le revêtement (3), est divisé, transversalement, au moins sur la longueur de la matelassure portant la première fente (F1) et la deuxième fente (F2) en :
- un premier revêtement latéral (30) destiné à venir recouvrir au moins la face avant de la première portion latérale (27) de la matelassure,
- un deuxième revêtement latéral (31) destiné à venir recouvrir au moins la face avant de la deuxième portion latérale (28) de la matelassure,
- un revêtement central (32) destiné à venir recouvrir la portion centrale (26) de la matelassure.

8. Coussin selon la revendication 7, dans lequel :
- le premier revêtement latéral (30) est accroché à la première portion de fil (40) pour assurer son maintien en tension sur la première portion latérale (27),
- le deuxième revêtement latéral (31) est accroché à la deuxième portion de fil (41) pour assurer son maintien en tension sur la deuxième portion latérale (28) ;
- le revêtement central (32) est accroché de manière réversible par le premier système de clipse (50) sur la première portion de fil (40) et par le deuxième système de clipse (51) sur la deuxième portion de fil (41) configuré pour assurer le maintien en tension du revêtement central (32) sur la portion centrale (26) avec le dit maintien de la portion centrale (26) bloquée entre la première portion latérale (27) et la deuxième portion latérale (28) et dans lequel le revêtement central (32) est configuré pour autoriser le dégagement de l'ouverture d'accès (Oa) après détachement des premier et second systèmes de clipse (50,51) libérant le revêtement central (32) et la portion centrale (26) , puis autorisant le retrait du revêtement central (32) et de la portion centrale (26)

9. Coussin selon la revendication 8, dans lequel :
- un ou plusieurs profilé d'accroche (PF) solidaire du premier revêtement latéral (30) comprend une première portion d'accrochage (PAC1) venant s'accrocher sur la première portion de fil (40),
- un ou plusieurs profilé d'accroche (PF) solidaire du deuxième revêtement latéral (30) comprend une première portion d'accrochage (PAC1) venant s'accrocher sur la deuxième portion de fil (41).

10. Coussin selon la revendication 9, dans lequel :
- le premier système de clipse (50) comprend une seconde portion d'accrochage (PAC2) du profilé d'accroche (PF) ainsi qu'un premier organe de clipsage (52) solidaire du revêtement central (32) configuré pour venir se fixer de manière réversible dans la seconde portion d'accrochage (PAC2) alors que la première portion d'accrochage (PAC1) du profilé d'accroche (PF) est en prise avec la première portion de fil (40),
- le deuxième système de clipse (51) comprend une seconde portion d'accrochage (PAC2) du profilé d'accroche (PF) ainsi qu'un deuxième organe de clipsage (53) solidaire du revêtement central (32) configuré pour venir se fixer de manière réversible dans la seconde portion d'accrochage (PAC2) alors que la première portion d'accrochage (PAC1) du profilé d'accroche (PF) est en prise avec la deuxième portion de fil (41).

11. Coussin selon l'une des revendications 1 à 10, dans lequel la surface avant de la matelassure au niveau de la première portion latérale (27) et la surface avant de la matelassure au niveau la deuxième portion latérale (28) s'étendent en saillie de manière relevée par rapport à la surface avant de la matelassure au niveau de la portion centrale (26), et de sorte que la première portion latérale (27) et la deuxième portion latérale (28) sont configurées pour assurer un maintien latéral de la partie du corps de l'occupant en appui sur la portion centrale (26) .

12. Coussin selon l'une des revendications 1 à 11 dans lequel la matelassure (2), y compris la première portion latérale (27), la deuxième portion latérale (28) et la portion centrale (26) est un corps moulé obtenu par moulage d'un produit moussé.

13. Coussin selon la revendication 12, dans lequel la première fente (F1) et la deuxième fente (F2) sont obtenues au moins en parte respectivement par une première coupe et une deuxième coupe dans le corps moulé.

14. Siège de véhicule comprenant un châssis d'assise et un châssis de dossier, un coussin d'assise (10) solidaire du châssis d'assise destiné à recevoir la partie basse du corps de l'occupant et un coussin de dossier(11) solidaire du châssis de dossier, destiné à recevoir la partie haute du corps de l'occupant, et dans lequel ledit coussin d'assise (10) est un coussin selon l'une des revendications 1 à 13 et/ou le coussin de dossier (11) est un coussin selon l'une des revendications 1 à 13, ladite portion centrale (26) du coussin, d'assise ou de dossier, comprenant le système de clipsage (5) avec le premier système de clipse (50) au niveau de la première paroi externe (260), configuré pour venir se fixer de manière réversible sur la première portion de fil (40), et le deuxième système de clipse (51) au niveau de la deuxième paroi externe (261) configuré pour venir se fixer de manière amovible sur la deuxième portion de fil (41) en assurant la maintien de la portion centrale (26) de la matelassure bloquée entre la première portion latérale (27) et la deuxième portion latérale (28), et dans lequel lorsque le premier système de clipse (50) et le deuxième système de clipse (51) sont détachés respectivement de la première portion de fil (40) et de la deuxième portion de fil (41), la portion centrale (26) de matelassure est libérée configurée pour être amovible par rapport à la première portion latérale (27) et à la deuxième portion latérale (28) en dégageant une ouverture d'accès (Oa) entre la première portion latérale (27) et à la deuxième portion latérale (28) alors fixées au châssis d'assise ou de dossier du siège.

15. Siège selon la revendication 14 mettant en oeuvre un coussin d'assise et/ou un coussin de dossier selon la revendication 9 ou 10, et dans lequel :
- la première portion latérale (27) du coussin d'assise (10) et/ou du coussin de dossier (11) est fixée au châssis d'assise et/ou au châssis de dossier par le premier revêtement latéral (30), recouvrant ladite première portion latérale (27), et l'accroche de la première portion d'accrochage (PAC1) du profilé d'accroche (PF) sur la première portion de fil (40) ,
- la deuxième portion latérale (28) du coussin d'assise (10) et/ou du coussin de dossier (11) est fixée au châssis d'assise et/ou au châssis de dossier par le deuxième revêtement latéral (31), recouvrant ladite deuxième portion latérale (28), et l'accroche de la première portion d'accrochage (PAC1) du profilé d'accroche (PF) sur la deuxième portion de fil (41).

16. Siège selon la revendication 15, mettant en oeuvre, un coussin d'assise (10) et/ou un coussin de dossier (11) selon la revendication 10, dans lequel la portion centrale (26) de la matelassure du coussin d'assise et/ou du coussin de dossier est amovible une fois que le premier organe de clipsage (52) solidaire du revêtement central (32) est détaché de la seconde portion d'accrochage (PAC2) du profilé d'accroche solidaire du premier revêtement latéral (30) et que le deuxième organe de clipsage (53) solidaire du revêtement central (32) est détaché de la seconde portion d'accrochage (PAC2) du profilé d'accroche solidaire du deuxième revêtement latéral (31).

17. Siège selon l'une des revendications 14 à 15, comprenant un équipement choisi parmi :
- un équipement de chauffage (Epc) comprenant un circuit électrique résistif,
- un équipement de ventilation (Epv) comprenant un ventilateur, ,
- un équipement de massage (Epm) comprenant un actionneur,
ledit équipement positionné en regard de la face arrière du coussin selon l'une des revendications 1 à 13 lorsque la portion centrale (26) de la matelassure est bloquée par le premier système de clipse (50) et le deuxième système de clipse (51), ledit équipement étant configuré pour être inséré et retiré par l'ouverture d'accès (Oa) laissée par la portion centrale lorsque retirée et alors que la première portion latérale (27) et à la deuxième portion latérale (28) restent fixées au châssis d'assise ou au châssis de dossier.

18. Procédé de fabrication d'une matelassure d'un coussin selon l'une des revendications 1 à 13 comprenant :
- /a/ la fourniture d'un moule dont les parois internes définissent la face avant (20), la face arrière (21), les faces latérales (22,23) et les faces d'extrémité (24,25) de la matelassure,
- /b/ une insertion dans le moule de la première portion de fil (40) et de la deuxième portion fil (41),
- /c/ un moulage par une injection d'un produit moussé dans la moule en obtenant le surmoulage de la première portion de fil (40) et de la deuxième portion de fil (41),
- /d/ un démoulage du produit moulé dans le moule par ouverture du moule,
et dans lequel on obtient la première fente (F1) et la deuxième fente (F2):
- selon un première possibilité, lors du moulage en /c/ par la mise en place préalable de deux inserts en /b/, puis le retrait des deux inserts afin de libérer la première fente (F1) et la deuxième fente (F2), ainsi que la première portion de fil (40) et la deuxième portion de fil (41) destinées à être agrippées par le système de clipsage (5),
- selon une seconde possibilité après démoulage en /d/ par la mise en place de deux découpes afin de libérer la première portion de fil (40) et la deuxième portion de fil (41) destinées à être agrippées par le système de clipsage (5) ou encore,
- selon une troisième possibilité en combinant la première possibilité et la deuxième possibilité, les inserts permettant de former la première fente (F1) et la deuxième fentes (F2) en partie seulement, les deux découpes assurant la finalisation des première et deuxième fentes (F1, et F2).

19. Procédé de modernisation d'un siège de véhicule selon l'une des revendications 14 à 16, intégré dans un véhicule automobile, fixé par le châssis d'assise à un plancher du véhicule, sans démontage .du siège du plancher et dans lequel pour le coussin d'assise (10) et/ou le coussin de dossier (11) dans lequel :
- /A/ on détache le premier système de clipse (50) et le deuxième système de clipse (51) respectivement de la première portion de fil (40) et de la deuxième portion de fil (41), et on retire la portion centrale (26) de la matelassure de sorte à dégager une ouverture d'accès (Oa) entre la première portion latérale (27) et à la deuxième portion latérale (28) fixées au châssis d'assise ou châssis de dossier du siège,
- /B/ on insère au travers de l'ouverture d'accès (Oa) dans une armature du siège un équipement choisi parmi un équipement de chauffage (Epc) résistif, ou encore un équipement de massage (Epm), ou encore un équipement de ventilation (Epv),
- /C/ on referme l'ouverture d'accès (Oa) en recouvrant l'équipement par la face arrière (21) de la portion centrale (26) et on attache le premier système de clipse (50) et le deuxième système de clipse (51) respectivement à la première portion de fil (40) et à la deuxième portion de fil (41) de sorte à maintenir bloquée la portion centrale (26) de la matelassure entre la première portion latérale (27) et le deuxième portion latérale (28) de la matelassure.

## Patentansprüche

1. Sitzkissen (1) für einen Fahrzeugsitz, umfassend:
- eine Polsterung (2), welche eine vordere Fläche (20), welche dazu vorgesehen ist, einen Teil des Insassen aufzunehmen, und eine hintere Fläche (21), welche dazu vorgesehen ist, in Anlage gegen einen Rahmen des Sitzes zu kommen, gegenüberliegende laterale Flächen (22, 23) und gegenüberliegende Endflächen (24, 25) aufweist,
- eine Hülle (3), welche wenigstens die vordere Fläche (20) oder gar die gesamten oder einen Teil der lateralen Flächen (22, 23) und/oder der Endflächen (24, 25) bedeckt,
**dadurch gekennzeichnet, dass** die Polsterung einen ersten Spalt (F1) und einen zweiten Spalt (F2) umfasst, welche sich jeweils in ihrer Länge wenigstens einem Längenabschnitt des Sitzkissens folgend zwischen den beiden Endflächen (24, 25) der Polsterung erstrecken, wobei der erste Spalt (F1) und der zweite Spalt (F2) jeweils von der vorderen Fläche (20) bis zu der hinteren Fläche (21) hindurchtreten, wobei der erste Spalt (F1) und der zweite Spalt (F2) die Polsterung (2) einer transversalen Richtung folgend in drei Abschnitte unterteilen, welche einen zentralen Abschnitt (26) einen ersten lateralen Abschnitt (27) und einen zweiten lateralen Abschnitt (28) umfassen, welche beiderseits des zentralen Abschnitts (26) angeordnet sind, wobei der erste Spalt (F1) zwischen einer inneren Wand (270) des ersten lateralen Abschnitts (27) und einer ersten äußeren Wand (260) des zentralen Abschnitts (26) begrenzt ist, wobei der zweite Spalt (F2) zwischen einer inneren Wand (280) des zweiten lateralen Abschnitts und einer zweiten äußeren Wand (261) des zentralen Abschnitts begrenzt ist,
und wobei sich ein erster steifer Drahtabschnitt (40), welcher mit den ersten lateralen Abschnitt (27) verbunden ist, auf der Höhe des ersten Spalts (F1) entlang der inneren Wand (270) des ersten lateralen Abschnitts (27) erstreckt und sich ein zweiter steifer Drahtabschnitt (41), welcher mit dem zweiten lateralen Abschnitt (28) verbunden ist, auf der Höhe des zweiten Spalts (F2) entlang der inneren Wand (280) des zweiten lateralen Abschnitts (28) erstreckt, und wobei das Sitzkissen ein Haltesystem (5) mit einem ersten Schnappsystem (50) auf der Höhe der ersten äußeren Wand (260), welches dazu eingerichtet ist, sich in lösbarer Weise an dem ersten Drahtabschnitt (40) zu fixieren, und einem zweiten Schnappsystem (51) auf der Höhe der zweiten äußeren Wand (261) umfasst, welches dazu eingerichtet ist, sich in bewegbarer Weise an dem zweiten Drahtabschnitt zu fixieren, um sicherzustellen, dass der zentrale Abschnitt (26) der Polsterung zwischen dem ersten lateralen Abschnitt (27) und dem zweiten lateralen Abschnitt (28) blockiert verbleibt, und wobei wenn das erste Schnappsystem (50) und das zweite Schnappsystem (51) von dem ersten Drahtabschnitt (40) bzw. dem zweiten Drahtabschnitt (41) getrennt sind, der zentrale Abschnitt (26) der Polsterung freigegeben ist, dazu eingerichtet, bewegbar gegenüber dem ersten lateralen Abschnitt (27) und dem zweiten lateralen Abschnitt (28) zu sein, wobei eine Zugangsöffnung (Oa) zwischen dem ersten lateralen Abschnitt (27) und dem zweiten lateralen Abschnitt (28) freigelegt wird, welche dann dazu vorgesehen sind, an dem Rahmen des Sitzes fixiert zu verbleiben.

2. Sitzkissen nach Anspruch 1, wobei sich der erste Spalt (F1) und der zweite Spalt (F2) in ihrer Länge zwischen den beiden Endflächen (24, 25) teilweise an der Länge der Polsterung und derart erstrecken, dass der zentrale Abschnitt (26) einerseits und der erste laterale Abschnitt (27) und der zweite laterale Abschnitt (28) andererseits an einem Endabschnitt (29) der Polsterung anliegen, welcher frei von den ersten und zweiten Spalten (F1, F2) ist, und wobei der zentrale Abschnitt der Polsterung (26) dazu eingerichtet ist, bewegbar bezüglich dem ersten lateralen Abschnitt (27) und dem zweiten lateralen Abschnitt (28) zu sein, welche demnach dazu vorgesehen sind, fixiert an dem Rahmen des Sitzes durch Biegen der Polsterung zu ruhen, sobald das erste Schnappsystem (50) und das zweite Schnappsystem (51) jeweils von dem ersten Drahtabschnitt (40) und dem zweiten Drahtabschnitt (41) gelöst sind.

3. Sitzkissen nach Anspruch 2, wobei sich ein Hals (G) transversal an der vorderen Fläche der Polsterung wenigstens an der Länge des zentralen Abschnitts (26) auf der Höhe einer Übergangszone zwischen dem zentralen Abschnitt (26) und dem Endabschnitt (29) erstreckt, wobei der zentrale Abschnitt (26) dazu eingerichtet ist, durch Biegen um die Achse des Halses (G) bewegbar zu sein.

4. Sitzkissen nach Anspruch 2 oder Anspruch 3, wobei sich der erste Spalt (F1) und der zweite Spalt (F2) in ihrer Länge teilweise an der Länge der Polsterung erstrecken, indem der Endabschnitt (29) belassen wird, an welchen einerseits der zentrale Abschnitt (26) und andererseits der erste laterale Abschnitt (27) und der zweite laterale Abschnitt (28) anliegen, wobei der Endabschnitt (29) eine der beiden Endflächen trägt, welche als erste Endfläche (24) bezeichnet ist, und wobei sich der erste Spalt (F1) und der zweite Spalt (F2) bis zu der anderen Fläche aus den beiden Endflächen erstrecken, welche als zweite Endfläche (25) bezeichnet ist, wobei der erste Spalt (F1) und der zweite Spalt (F2) mittels der zweiten Endfläche (25) geöffnet sind.

5. Sitzkissen nach einem der Ansprüche 1 bis 4, wobei:
- der erste Drahtabschnitt (40), welcher sich entlang des ersten Spalts (F1) erstreckt, gebogene Längenabschnitte (400, 401) aufweist, welche auf den ersten lateralen Abschnitt (27) überformt sind, sowie Längenabschnitte, welche von der inneren Wand (270) des ersten lateralen Abschnitts (27) hervorstehen, welche zum Einhaken zum Fixieren der Hülle und/oder des ersten Schnappsystems (50) dienen,
- der zweite Drahtabschnitt (41), welcher sich entlang des zweiten Spalts (F2) erstreckt, gebogene Längenabschnitte (410, 411) aufweist, welche auf den zweiten lateralen Abschnitt (28) überformt sind, sowie Längenabschnitte, welche von der inneren Wand (280) des zweiten lateralen Abschnitts (28) hervorstehen, welche zum Einhaken zum Fixieren der Hülle und/oder des zweiten Schnappsystems (51) dienen.

6. Sitzkissen nach einem der Ansprüche 2 alleine oder in Kombination mit einem der Ansprüche 3 bis 5, wobei ein gleicher steifer Draht im Wesentlichen in U-Form den ersten Drahtabschnitt (40) und den zweiten Drahtabschnitt (41) einerseits bildet, wobei andererseits durch die beiden vertikalen Schenkel des U, welche jeweils an dem ersten lateralen Abschnitt (27) und dem zweiten lateralen Abschnitt (28) angebracht sind, ein Zwischen-Längenbereich (42) gebildet ist, welcher den horizontalen Schenkel des U bildet, welcher auf den Endabschnitt der Polsterung überformt ist.

7. Sitzkissen nach einem der Ansprüche 1 bis 6, wobei die Hülle (3) transversal wenigstens auf der Länge der Polsterung, welche den ersten Spalt (F1) und den zweiten Spalt (F2) trägt, unterteilt ist in:
- eine erste laterale Hülle (30), welche dazu vorgesehen ist, wenigstens die vordere Fläche des ersten lateralen Abschnitts (27) der Polsterung zu bedecken,
- eine zweite laterale Hülle (31), welche dazu vorgesehen ist, wenigstens die vordere Fläche des zweiten lateralen Abschnitts (28) der Polsterung zu bedecken,
- eine zentrale Hülle (32), welche dazu vorgesehen ist, den zentralen Abschnitt (26) der Polsterung zu bedecken.

8. Sitzkissen nach Anspruch 7, wobei:
- die erste laterale Hülle (30) an dem ersten Drahtabschnitt (40) befestigt ist, um sicherzustellen, dass sie unter Spannung an dem ersten lateralen Abschnitt (27) verbleibt,
- die zweite laterale Hülle (31) an dem zweiten Drahtabschnitt (41) befestigt ist, um sicherzustellen, dass sie unter Spannung an dem zweiten lateralen Abschnitt (28) verbleibt;
- die zentrale Hülle (32) lösbar durch das erste Schnappsystem (50) an dem ersten Drahtabschnitt (40) und durch das zweite Schnappsystem (51) an dem zweiten Drahtabschnitt (41) befestigt ist, dazu eingerichtet, sicherzustellen, dass die zentrale Hülle (32) an dem zentralen Abschnitt (26) unter Spannung verbleibt, wobei somit der zentrale Abschnitt (26) zwischen dem ersten lateralen Abschnitt (27) und dem zweiten lateralen Abschnitt (28) blockiert verbleibt, und wobei die zentrale Hülle (32) dazu eingerichtet ist, das Freilegen der Zugangsöffnung (Oa) nach einem Lösen der ersten und zweiten Schnappsysteme (50, 51) zu erlauben, wobei die zentrale Hülle (32) und der zentrale Abschnitt (26) freigegeben werden, wobei ferner das Zurückziehen der zentralen Hülle (32) und des zentralen Abschnitts (26) ermöglicht wird.

9. Sitzkissen nach Anspruch 8, wobei:
- ein oder mehrere Hakenprofile (PF), welche mit der ersten lateralen Hülle (30) verbunden sind, einen ersten Hakenabschnitt (PAC1) umfassen, welcher sich an dem ersten Drahtabschnitt (40) einhakt,
- ein oder mehrere Hakenprofile (PF), welche mit der zweiten lateralen Hülle (30) verbunden sind, einen ersten Hakenabschnitt (PAC1) umfassen, welcher sich an dem zweiten Drahtabschnitt (41) einhakt.

10. Sitzkissen nach Anspruch 9, wobei:
- das erste Schnappsystem (50) einen zweiten Hakenabschnitt (PAC2) des Hakenprofils (PF) umfasst, so dass ein erstes Schnappelement (52), welches mit der zentralen Hülle (32) verbunden ist, dazu eingerichtet ist, sich in lösbarer Weise an dem zweiten Hakenabschnitt (PAC2) zu fixieren, während der erste Hakenabschnitt (PAC1) des Hakenprofils (PF) in Eingriff mit dem ersten Drahtabschnitt (40) steht,
- das zweite Schnappsystem (51) einen zweiten Hakenabschnitt (PAC2) des Hakenprofils (PF) umfasst, so dass ein zweites Schnappelement (53), welches mit der zentralen Hülle (32) verbunden ist, dazu eingerichtet ist, sich in lösbarer Weise an dem zweiten Hakenabschnitt (PAC2) zu fixieren, während der erste Hakenabschnitt (PAC1) des Hakenprofils (PF) in Eingriff mit dem zweiten Drahtabschnitt (41) steht.

11. Sitzkissen nach einem der Ansprüche 1 bis 10, wobei sich die vordere Fläche der Polsterung auf der Höhe des ersten lateralen Abschnitts (27) und die vordere Fläche der Polsterung auf der Höhe des zweiten lateralen Abschnitts (28) in nach oben stehender Weise bezüglich der vorderen Fläche der Polsterung auf der Höhe des zentralen Abschnitts (26) hervorstehend erstrecken, dass der erste laterale Abschnitt (27) und der zweite laterale Abschnitt (28) dazu eingerichtet sind, ein laterales Halten des Abschnitts des Körpers des Insassen in Anlage an dem zentralen Abschnitt (26) sicherzustellen.

12. Sitzkissen nach einem der Ansprüche 1 bis 11, wobei Polsterung (2), welche den ersten lateralen Abschnitt (27), den zweiten lateralen Abschnitt (28) und den zentralen Abschnitt (26) umfasst, ein gegossener Körper ist, welcher durch Gießen eines Schaumprodukts erhalten wird.

13. Sitzkissen nach Anspruch 12, wobei der erste Spalt (F1) und der zweite Spalt (F2) wenigstens teilweise jeweils durch einen ersten Schnitt und einen zweiten Schnitt in dem gegossenen Körper erhalten sind.

14. Fahrzeugsitz, umfassend einen Sitzrahmen und einen Rückenrahmen, wobei ein Sitzflächenkissen (10), welches mit dem Sitzrahmen verbunden ist, dazu vorgesehen ist, den unteren Teil des Körpers des Insassen aufzunehmen, und ein Rückenkissen (11), welches mit dem Rückenrahmen verbunden ist, dazu vorgesehen ist, den oberen Teil des Körpers des Insassen aufzunehmen, und wobei das Sitzflächenkissen (10) ein Sitzkissen nach einem der Ansprüche 1 bis 13 ist und/oder das Rückenkissen (11) ein Sitzkissen nach einem der Ansprüche 1 bis 13 ist, wobei der zentrale Abschnitt (26) des Sitzkissens der Sitzfläche oder des Rückens ein Haltesystem (5) mit dem ersten Schnappsystem (50) auf der Höhe der ersten äußeren Wand (260), welches dazu eingerichtet ist, sich in lösbarer Weise an dem ersten Drahtabschnitt (40) zu fixieren, und dem zweiten Schnappsystem (51) auf der Höhe der zweiten externen Wand (261) umfasst, welches dazu eingerichtet ist, sich in beweglicher Weise an dem zweiten Drahtabschnitt (41) zu fixieren, um sicherzustellen, dass der zentrale Abschnitt (26) der Polsterung zwischen dem ersten lateralen Abschnitt (27) und dem zweiten lateralen Abschnitt (28) blockiert verbleibt, und wobei wenn des erste Schnappsystem (50) und das zweite Schnappsystem (51) von dem ersten Drahtabschnitt (40) bzw. dem zweiten Drahtabschnitt (41) gelöst sind, der zentrale Abschnitt (26) der Polsterung freigegeben ist, dazu eingerichtet, bewegbar bezüglich dem ersten lateralen Abschnitt (27) und dem zweiten lateralen Abschnitt (28) zu sein, indem eine Zugangsöffnung (Oa) zwischen dem ersten lateralen Abschnitt (27) und dem zweiten lateralen Abschnitt (28) freigelegt wird, welche dann an dem Sitzrahmen oder dem Rückenrahmen des Sitzes fixiert sind.

15. Sitz nach Anspruch 14, welcher ein Sitzflächenkissen und/oder ein Rückenkissen nach Anspruch 9 oder 10 ausführt, und wobei:
- der erste laterale Abschnitt (27) des Sitzflächenkissens (10) und/oder des Rückenkissens (11) an dem Sitzrahmen und/oder dem Rückenrahmen mittels der ersten lateralen Hülle (30) fixiert ist, welche den ersten lateralen Abschnitt (27) bedeckt, sowie des Einhakens des ersten Hakenabschnitts (PAC1) des Hakenprofils (PF) an dem ersten Drahtabschnitt (40),
- der zweite laterale Abschnitt (28) des Sitzflächenkissens (10) und/oder des Rückenkissens (11) an dem Sitzrahmen und/oder dem Rückenrahmen mittels der zweiten lateralen Hülle (31) fixiert ist, welche den zweiten lateralen Abschnitt (28) bedeckt, sowie des Einhakens des ersten Hakenabschnitts (PAC1) des Hakenprofils (PF) an dem zweiten Drahtabschnitt (41).

16. Sitz nach Anspruch 15, welcher ein Sitzflächenkissen (10) und/oder ein Rückenkissen (11) nach Anspruch 10 ausführt, wobei der zentrale Abschnitt (26) der Polsterung des Sitzflächenkissens und/oder des Rückenkissens bewegbar ist, sobald das erste Schnappelement (52), welches mit der zentralen Hülle (32) verbunden ist, von dem zweiten Hakenabschnitt (PAC2) des Hakenprofils gelöst ist, welches mit der ersten lateralen Hülle (30) verbunden ist, und sobald das zweite Schnappelement (53), welches mit der zentralen Hülle (32) verbunden ist, von dem zweiten Hakenelement (PAC2) des Hakenprofils gelöst ist, welches mit der zweiten lateralen Hülle (31) verbunden ist.

17. Sitz nach einem der Ansprüche 14 bis 15, umfassend eine Ausrüstung, ausgewählt aus:
- einer Heizausrüstung (Epc), welche eine elektrische Widerstandsschaltung umfasst,
- einer Belüftungsausrüstung (Epv), welche eine Belüftung umfasst,
- einer Massageausrüstung (Epm), welche einen Aktuator umfasst,
wobei die Ausrüstung bezüglich der hinteren Fläche des Sitzkissens nach einem der Ansprüche 1 bis 13 positioniert ist, wenn der zentrale Abschnitt (26) der Polsterung durch das erste Schnappsystem (50) und das zweite Schnappsystem (51) blockiert ist, wobei die Ausrüstung dazu eingerichtet ist, durch die Zugangsöffnung (Oa) eingesetzt und entnommen zu werden, welche durch den zentralen Abschnitt belassen wird, wenn er zurückgezogen ist, und so dass der erste laterale Abschnitt (27) und der zweite laterale Abschnitt (28) fixiert an dem Sitzrahmen oder an dem Rückenrahmen ruhen.

18. Verfahren zum Herstellen einer Polsterung eines Sitzkissens nach einem der Ansprüche 1 bis 13, umfassend:
- /a/ das Bereitstellen einer Form, deren inneren Wände die vordere Fläche (20), die hintere Fläche (21), die lateralen Flächen (22, 23) und die Endflächen (24, 25) der Polsterung definieren,
- /b/ ein Eingeben in die Form des ersten Drahtabschnitts (40) und des zweiten Drahtabschnitts (41),
- /c/ ein Gießen durch Einspritzen eines Schaumprodukts in die Form, wobei das Überformen des ersten Drahtabschnitts (40) und des zweiten Drahtabschnitts (41) erhalten wird,
- /d/ ein Entformen des gegossenen Produkts in der Form durch Öffnen der Form,
und wobei der erste Spalt (F1) und der zweite Spalt (F2) erhalten werden:
- gemäß einer ersten Möglichkeit, während des Gießens in /c/ durch vorhergehendes Anordnen von zwei Einsätzen in /b/ und anschließendes Entfernen der beiden Einsätze, um so den ersten Spalt (F1) und den zweiten Spalt (F2) sowie den ersten Drahtabschnitt (40) und den zweiten Drahtabschnitt (41), welche dazu vorgesehen sind, von dem Haltesystem (5) gegriffen zu werden, freizulegen,
- gemäß einer zweiten Möglichkeit, nach dem Entformen in /d/ durch Ausführen zweier Schnitte, um so den ersten Drahtabschnitt (40) und den zweiten Drahtabschnitt (41) freizulegen, welche dazu vorgesehen sind, von dem Haltsystem (5) gegriffen zu werden, oder
- gemäß einer dritten Möglichkeit durch Kombinieren der ersten Möglichkeit und der zweiten Möglichkeit, wobei die Einsätze das Bilden des ersten Spalts (F1) und des zweiten Spalts (F2) nur teilweise ermöglichen, wobei die beiden Schnitte das Fertigstellen der ersten und zweiten Spalte (F1 und F2) sicherstellen.

19. Verfahren zum Erneuern eines Fahrzeugsitzes nach einem der Ansprüche 14 bis 16, welcher in einem Automobil integriert ist, welcher durch den Sitzrahmen an einem Boden des Fahrzeugs fixiert ist, ohne Abmontieren des Sitzes von dem Boden, und wobei für das Sitzflächenkissen (10) und/oder das Rückenkissen (11):
- /A/ das erste Schnappsystem (50) und das zweite Schnappsystem (51) von dem ersten Drahtabschnitt (40) bzw. dem zweiten Drahtabschnitt (41) gelöst werden und der zentrale Abschnitt (26) der Polsterung derart zurückgezogen wird, dass eine Zugangsöffnung (Oa) zwischen dem ersten lateralen Abschnitt (27) und dem zweiten lateralen Abschnitt (28) geöffnet wird, welche an dem Sitzrahmen oder dem Rückenrahmen des Sitzes fixiert sind,
- /B/ durch die Zugangsöffnung (Oa) hindurch in ein Gestell des Sitzes eine Ausrüstung eingesetzt wird, welche ausgewählt ist aus einer Widerstand-Heizausrüstung (Epc) oder einer Massageausrüstung (Epm) oder einer Belüftungsausrüstung (Epv),
- /C/ die Zugangsöffnung (Oa) wieder verschlossen wird, indem die Ausrüstung durch die hintere Fläche (21) des zentralen Abschnitts (26) wieder bedeckt wird und das erste Schnappsystem (50) und das zweite Schnappsystem (51) derart an dem ersten Drahtabschnitt (40) bzw. dem zweiten Drahtabschnitt (41) angebracht werden, dass der zentrale Abschnitt (26) der Polsterung zwischen dem ersten lateralen Abschnitt (27) und dem zweiten lateralen Abschnitt (28) der Polsterung blockiert verbleibt.

## Claims

1. A cushion (1) for vehicle seat comprising:
- a padding (2) having a front face (20) intended to receive a portion of the occupant, and a rear face (21) intended to bear on a frame of the seat, opposite lateral faces (22, 23), and opposite end faces (24, 25),
- a coating (3) covering at least the front face (20), or even all or part of the lateral faces (22, 23) and/or the end faces (24, 25),
**characterised in that** the padding comprises a first slot (F1) and a second slot (F2), each extending in length along at least one section of the length of the cushion between the two end faces (24, 25) of the padding, the first slot (F1) and the second slot (F2) being respectively through slots from the front face (20) to the rear face (21),
the first slot (F1) and the second slot (F2) dividing the padding (2) along a transverse direction into three portions, including a central portion (26), a first lateral portion (27) and a second lateral portion (28) disposed on either side of the central portion (26), the first slot (F1) delimited between an inner wall (270) of the first lateral portion (27) and a first outer wall (260) of the central portion (26), the second slot (F2) delimited between an inner wall (280) of the second lateral portion and a second outer wall (261) of the central portion
and wherein a first rigid wire portion (40) which is secured to the first lateral portion (27) extends at the first slot (F1), along the inner wall (270) of the first lateral portion (27), and a second rigid wire portion (41), which is secured to the second lateral portion (28) extends at the second slot (F2), along the inner wall (280) of the second lateral portion (28), and wherein said cushion comprises a clipping system (5) with a first clip system (50) at the first outer wall (260), configured to be reversibly fastened on the first wire portion (40), and a second clip system (51) at the second outer wall (261) configured to be removably fastened on the second wire portion by ensuring the maintenance of the central portion (26) of the padding blocked between the first lateral portion (27) and the second lateral portion (28) and wherein when the first clip system (50) and the second clip system (51) are respectively detached from the first wire portion (40) and the second wire portion (41), the central padding portion (26) is released, configured to be removable relative to the first lateral portion (27) and the second lateral portion (28) by releasing an access opening (Oa) between said first lateral portion (27) and said second lateral portion (28) then intended to remain fastened to the seat frame.

2. The cushion according to claim 1, wherein the first slot (F1) and the second slot (F2) extend in length between the two end faces (24, 25) partially over the length of the padding and such that the central portion (26), on the one hand, the first lateral portion (27) and the second lateral portion (28), on the other hand, are adjacent to an end portion (29) of the padding devoid of the first and second slots (F1, F2) and wherein the central portion of padding (26) is configured to be removable relative to the first lateral portion (27) and to the second lateral portion (28) then intended to remain fastened to the frame of the seat, by folding the padding, once the first clip system (50) and the second clip system (51) have been detached respectively from the first wire portion (40) and from the second wire portion (41).

3. The cushion according to claim 2, wherein a groove (G) extends transversely on the front face of the padding, at least over the width of the central portion (26) at a junction area between the central portion (26) and said end portion (29), the central portion (26) being configured to be removable by folding about the axis of the groove (G).

4. The cushion according to claim 2 or claim 3, wherein the first slot (F1) and the second slot (F2) extend in length partially over the length of the padding, leaving said end portion (29) to which the central portion (26), on the one hand, and the first lateral portion (27) and the second lateral portion (28), on the other hand, are adjacent, the end portion (29) carrying one of the two end faces, called the first end face (24), and wherein the first slot (F1) and the second slot (F2) extend to the other face of the two end faces, called second end face (25), the first slot (F1) and the second slots (F2) being opening through the second end face (25).

5. The cushion according to one of claims 1 to 4, wherein:
- the first wire portion (40) extending along the first slot (F1) has length portions (400, 401), which are curved, overmoulded in the first lateral portion (27) and protruding length portions of the inner wall (270) of the first lateral portion (27) used as a hook for the fastening of the coating or of the first clip system (50),
- the second wire portion (41) extending along the second slot (F2) has length portions (410, 411), which are curved, overmoulded in the second lateral portion (28) and protruding length portions of the inner wall (280) of the second lateral portion (28) used as a hook for the fastening of the coating and/or the second clip system (51).

6. The cushion according to one of claims 2 alone, or taken in combination with one of claims 3 to 5, wherein the same generally U-shaped rigid wire constitutes the first wire portion (40) and the second wire portion (41), on the one hand, constituted by the two vertical wings of the U, secured respectively to the first lateral portion (27) and the second lateral portion (28), and, on the other hand, a section of intermediate length (42) forming the horizontal wing of the U which is overmoulded by the end portion of the padding.

7. The cushion according to one of claims 1 to 6, wherein the coating (3) is divided, transversely, at least over the length of the padding carrying the first slot (F1) and the second slot (F2) into:
- a first lateral coating (30) intended to cover at least the front face of the first lateral portion (27) of the padding,
- a second lateral coating (31) intended to cover at least the front face of the second lateral portion (28) of the padding,
- a central coating (32) intended to cover the central portion (26) of the padding.

8. The cushion according to claim 7, wherein:
- the first lateral coating (30) is hooked to the first wire portion (40) to ensure that it is held in tension on the first lateral portion (27),
- the second lateral coating (31) is hooked to the second wire portion (41) to ensure that it is held in tension on the second lateral portion (28):
- the central coating (32) is reversibly hooked by the first clip system (50) on the first wire portion (40) and by the second clip system (51) on the second wire portion (41) configured to ensure the holding in tension of the central coating (32) on the central portion (26) with said holding of the central portion (26) blocked between the first lateral portion (27) and the second lateral portion (28) and wherein the central coating (32) is configured to enable the disengagement of the access opening (Oa) after detachment of the first and second clip systems (50, 51) releasing the central coating (32) and the central portion (26), then enabling the removal of the central coating (32) and the central portion (26).

9. The cushion according to claim 8, wherein:
- one or more hooking profile (PF) secured to the first lateral coating (30) comprises a first hooking portion (PAC1) which is hooked on the first wire portion (40),
- one or more hooking profile (PF) secured to the second lateral coating (30) comprises a first hooking portion (PAC1) which is hooked on the second wire portion (41).

10. The cushion according to claim 9, wherein:
- the first clip system (50) comprises a second hooking portion (PAC2) of the hooking profile (PF) as well as a first clipping member (52) secured to the central coating (32) configured to be reversibly fastened in the second hooking portion (PAC2) while the first hooking portion (PAC1) of the hooking profile (PF) is engaged with the first wire portion (40),
- the second clip system (51) comprises a second hooking portion (PAC2) of the hooking profile (PF) as well as a second clip member (53) secured to the central coating (32) configured to be reversibly fastened in the second hooking portion (PAC2) while the first hooking portion (PAC1) of the hooking profile (PF) is engaged with the second wire portion (41).

11. The cushion according to one of claims 1 to 10, wherein the front surface of the padding at the first lateral portion (27) and the front surface of the padding at the second lateral portion (28) extend protruding in a raised manner relative to the front surface of the padding at the central portion (26), and such that the first lateral portion (27) and the second lateral portion (28) are configured to ensure a lateral holding of the portion of the body of the occupant bearing on the central portion (26).

12. The cushion according to one of claims 1 to 11, wherein the padding (2), including the first lateral portion (27), the second lateral portion (28) and the central portion (26) is a moulded body obtained by moulding a foamed product.

13. The cushion according to claim 12, wherein the first slot (F1) and the second slot (F2) are obtained at least partially respectively by a first cut and a second cut in the moulded body.

14. A vehicle seat comprising a seating frame and a seat back frame, a seating cushion (10) secured to the seating frame intended to receive the lower portion of the body of the occupant and a seat back cushion (11) secured to the seat back frame, intended to receive the upper portion of the body of the occupant, and wherein said seating cushion (10) is a cushion according to one of claims 1 to 13 and/or the seat back cushion (11) is a cushion according to one of claims 1 to 13, said central portion (26) of the seating or seat back cushion comprising the clipping system (5) with the first clip system (50) at the first outer wall (260), configured to be reversibly fastened on the first wire portion (40), and the second clip system (51) at the second outer wall (261) configured to be removably fastened on the second wire portion (41) by ensuring the holding of the central portion (26) of the padding blocked between the first lateral portion (27) and the second lateral portion (28), and wherein when the first clip system (50) and the second clip system (51) are respectively detached from the first wire portion (40) and the second wire portion (41), the central padding portion (26) is released configured to be removable relative to the first lateral portion (27) and to the second lateral portion (28) by releasing an access opening (Oa) between the first lateral portion (27) and the second lateral portion (28) then fastened to the seating or seat back frame of the seat.

15. The seat according to claim 14, implementing a seating cushion and/or a seat back cushion according to claim 9 or 10, and wherein:
- the first lateral portion (27) of the seating cushion (10) and/or of the seat back cushion (11) is fastened to the seating frame and/or to the seat back frame by the first lateral coating (30), covering said first lateral portion (27), and the hooking of the first hooking portion (PAC1) of the hooking profile (PF) on the first wire portion (40),
- the second lateral portion (28) of the seating cushion (10) and/or of the seat back cushion (11) is fastened to the seating frame and/or to the seat back frame by the second lateral coating (31), covering said second lateral portion (28), and the hooking of the first hooking portion (PAC1) of the hooking profile (PF) on the second wire portion (41).

16. The seat according to claim 15, implementing a seating cushion (10) and/or a seat back cushion (11) according to claim 10, wherein the central portion (26) of the padding of the seating cushion and/or of the seat back cushion is removable once the first clipping member (52), which is secured to the central covering (32), is detached from the second hooking portion (PAC2) of the hooking profile which is secured to the first lateral coating (30) and that the second clipping member (53) which is secured to the central coating (32) is detached from the second hooking portion (PAC2) of the hooking profile which is secured to the second lateral coating (31).

17. The seat according to one of claims 14 to 15, comprising equipment selected from:
- heating equipment (Epc) comprising a resistive electrical circuit,
- ventilation equipment (Epv) comprising a fan,
- massage equipment (Epm) comprising an actuator,
said equipment positioned opposite to the rear face of the cushion according to one of claims 1 to 13, when the central portion (26) of the padding is blocked by the first clip system (50) and the second clip system (51), said equipment being configured to be inserted and removed through the access opening (Oa) left by the central portion when removed and while the first lateral portion (27) and the second lateral portion (28) remain fastened to the seating frame or to the seat back frame.

18. A method of manufacturing a padding of a cushion according to one of claims 1 to 13, comprising:
- /a/ the provision of a mould whose inner walls define the front face (20), the rear face (21), the lateral faces (22, 23) and the end faces (24, 25) of the padding,
- /b/ an insertion of the first wire portion (40) and the second wire portion (41) into the mould,
- /c/ a moulding by an injection of a foam product into the mould by obtaining the overmoulding of the first wire portion (40) and of the second wire portion (41),
- /d/ an unmoulding of the moulded product in the mould by opening the mould, and wherein the first slot (F1) and the second slot (F2) are obtained:
- according to a first possibility, during the moulding in /c/ by the prior placement of two inserts in /b/, then the removal of the two inserts in order to release the first slot (F1) and the second slot (F2), as well as the first wire portion (40) and the second wire portion (41) intended to be gripped by the clipping system (5).
- according to a second possibility after demoulding in /d/ by placing two cutouts in order to release the first wire portion (40) and the second wire portion (41) intended to be gripped by the clipping system (5) or,
- according to a third possibility by combining the first possibility and the second possibility, the inserts allowing forming the first slot (F1) and the second slot (F2) only partially, the two cutouts ensuring the finalisation of the first and second slots (F 1, and F2).

19. The method for modernising a vehicle seat according to one of claims 14 to 16, integrated into a motor vehicle, fastened by the seating frame to a floor of the vehicle, without dismounting the seat from the floor and wherein for the seating cushion (10) and/or the seat back cushion (11) wherein:
- /A/ the first clip system (50) and the second clip system (51) are detached respectively from the first wire portion (40) and from the second wire portion (41), and the central portion (26) is removed from the padding so as to release an access opening (Oa) between the first lateral portion (27) and the second lateral portion (28) which are fastened to the seating frame or seat back frame of the seat,
- /B/ equipment, which is selected from resistive heating equipment (Epc), or else massage equipment (Epm), or even ventilation equipment (Epv), is inserted through the access opening (Oa) into an armature of the seat,
- /C/ the access opening (Oa) is closed by covering the equipment by the rear face (21) of the central portion (26) and the first clip system (50) and the second clip system (51) are attached respectively to the first wire portion (40) and to the second wire portion (41) so as to hold the central portion (26) of the padding blocked between the first lateral portion (27) and the second lateral portion (28) of the padding.
